# EUROPÄISCHE PATENTSCHRIFT

(11) **EP 2 809 736 B1**
(45) Veröffentlichungstag und Bekanntmachung des Hinweises auf die Patenterteilung: **24.08.2016**
(21) Anmeldenummer: 13704386.5
(22) Anmeldetag: 01.02.2013
(51) Int. Cl.: C09D 167/00

(54) **KLARLACKBESCHICHTUNGSZUSAMMENSETZUNG, VERFAHREN ZUR HERSTELLUNG UND VERWENDUNG**
CLEARCOAT COMPOSITION, METHOD FOR PRODUCTION AND USE
COMPOSITION DE REVÊTEMENT EN LAQUE TRANSPARENTE, SON PROCÉDÉ DE PRÉPARATION ET SON UTILISATION

(30) Priorität: 03.02.2012 US 201261594396 P; 03.02.2012 EP 12153865
(43) Veröffentlichungstag der Anmeldung: 10.12.2014
(73) Patentinhaber: BASF Coatings GmbH, 48165 Münster (DE)
(72) Erfinder: WEIHER, Christian, 48165 Münster (DE); KLEIN, Günter, 48165 Münster (DE); POPPE, Andreas, 48324 Sendenhorst (DE); CLAUSEN-MEIRING, Ulrike, 48308 Senden (DE); KLEINE BECKMANN, Helmut, 48346 Ostbevern (DE); AUSSMANN, Corinna, 59075 Hamm (DE); LEITNER, Thomas, 48165 Münster (DE)
(74) Vertreter: Leifert & Steffan
(86) Internationale Anmeldenummer: PCT/EP2013/052070
(87) Internationale Veröffentlichungsnummer: WO 2013/113893

(56) Entgegenhaltungen:
- WO-A1-2007/068683
- DE-A1- 19 525 375

## Beschreibung

Die vorliegende Erfindung betrifft eine Klarlackbeschichtungszusammensetzung, enthaltend mindestens einen Polyester, mindestens zwei verschieden reaktive Melamin-Formaldehyd-Harze, mindestens eine Harnstoffverbindung als Rheologiehilfsmittel und mindestens ein Säurekatalysator. Weiterhin betrifft die vorliegende Erfindung die Herstellung der Klarlackbeschichtungszusammensetzung sowie deren Verwendung zur Beschichtung unterschiedlicher Substrate.

### Stand der Technik

In der heutigen Automobillackierung werden unterschiedliche Substrate wie beispielsweise aus Metall oder Kunststoff hergestellte Karosserien und Karosserieteile lackiert. Neben einschichtigen Lackierungen werden dabei auch häufig Mehrschichtlackierungen aufgebaut. Mehrschichtlackierungen von metallischen Substraten bestehen in der Regel aus einer Elektrotauchlackschicht, einer Füllerschicht, einer Basislackschicht und einer Klarlackschicht. Im Falle von Kunststoffsubstraten werden entweder einschichtige Lackierungen oder ebenfalls Mehrschichtlackierungen aufgebaut. In letzterem Fall werden die üblichen, in der Kunststofflackierung einsetzbaren Füller-, Einschichtdecklack-, Basislack- und Klarlackbeschichtungszusammensetzungen, deren Auswahl und Einsatz dem Fachmann bekannt sind, eingesetzt.

Der hohe technologische und optische Anspruch, der an Lackierungen im Bereich der heutigen Automobilindustrie gestellt wird, sowie die Funktionen und technologischen Eigenschaften der jeweiligen einzelnen, oben genannten Lackschichten, sind dem Fachmann bekannt. Dabei prägen die Klarlackierungen so wesentliche optische Eigenschaften wie beispielsweise den Glanz und die Abbildungsunterscheidbarkeit (DOI, distinctiveness of image) beziehungsweise das Erscheinungsbild ("appearance") der lackierten Oberfläche. Dieses Erscheinungsbild wird in besonderem Maße von der Rauhigkeit beziehungsweise Welligkeit der Oberfläche beeinflusst. Während eine raue Oberfläche zu einem eher ungleichmäßigen, optisch unvorteilhaften Aussehen führt, besitzt eine besonders glatte, regelmäßige Oberfläche ein gutes Erscheinungsbild. Die Klarlackbeschichtungszusammensetzung, mit der die Klarlackschicht hergestellt wird, muss also entsprechende Eigenschaften aufweisen, damit das Erscheinungsbild der resultierenden Lackierung den hohen Anforderungen der Automobilindustrie entspricht. Hierbei handelt es sich insbesondere um gute Verlaufseigenschaften und ein gutes Füllvermögen der Klarlackbeschichtungszusammensetzung. Hierdurch können beispielsweise Unebenheiten des Substrats ausgeglichen werden, um eine möglichst glatte Oberfläche zu erhalten. In herkömmlichen Mehrschichtlackierungen wird dies gängigerweise durch die unterhalb der Klarlackschicht liegenden Lackschichten, insbesondere durch die Füllerschicht, bewirkt. Zur Steigerung der Effizienz von Lackierprozessen bei gleichzeitig angestrebter Kostenminimierung wird es jedoch immer wichtiger, dass auch die Klarlackbeschichtungszusammensetzungen die genannten Eigenschaften aufweisen. So wird beispielsweise versucht, im Rahmen von Lackierprozessen auch Stahlsubstrate einsetzen zu können, die eine höhere Rauhigkeit aufweisen und damit kostengünstiger sind. Diese höhere Rauhigkeit wird jedoch bislang häufig nicht ausreichend durch die unter der Klarlackschicht liegenden Lackschichten abgedeckt, sodass auch die eingesetzte Klarlackbeschichtungszusammensetzung ein gutes Füllvermögen aufweisen muss, um ein gutes Erscheinungsbild zu erreichen. Hinzu kommt, dass im Zuge der Prozessoptimierung häufig die Ablüftungs- und Trocknungszeiten der Nicht-Decklackschichten verringert werden, sodass hier keine maximale Verlaufswirkung erreicht wird. Des Weiteren wird versucht, die Schichtdicken der Lackschichten immer weiter zu reduzieren oder sogar einzelne Lackschichten im Rahmen innovativer Lackierungsprozesse vollständig auszulassen. Auch aus diesen Gründen wird die Aufgabe der Abdeckung von Unebenheiten immer mehr auch auf die Klarlackschicht verlagert. Entsprechend wichtig ist es, dass Klarlackbeschichtungszusammensetzungen ein gutes Füllvermögen aufweisen und damit zu einem hervorragenden Erscheinungsbild der lackierten Oberfläche beitragen.

EP 0 837 891 B1 offenbart ein Verfahren zur Automobilmehrschichtlackierung unter Verwendung von transparenten Überzugsmitteln, die sich beispielsweise durch einen guten Decklackstand, insbesondere Glanz, auszeichnen. Das Überzugsmittel enthält dabei eine spezielle Bindemittelkombination, wobei unter anderem ein (Meth)acrylatCopolymerisat, ein Polyester, ein blockiertes Isocyanat und ein Melaminharz eingesetzt werden.

In der Automobilindustrie besteht jedoch nach wie vor die Notwendigkeit von Verbesserungen hinsichtlich des optischen Erscheinungsbilds von lackierten Oberflächen.

Hinzu kommt, dass heutzutage als weitere Anforderung an Lacke, insbesondere an lösemittelhaltige Klarlackbeschichtungszusammensetzungen, die Erhöhung des nicht-flüchtigen Anteils (nfA) dieser Zusammensetzungen im Fokus der Lackindustrie steht. Durch geringfügige Erhöhung des nfA und damit einhergehend einer Reduzierung des Anteils flüchtiger organischer Stoffe, insbesondere Lösemittel, können die Systeme umweltfreundlicher gestaltet werden. Zudem wird bereits durch eine geringfügige Erhöhung des nfA ein geringerer Materialverbrauch/eine höhere Ergiebigkeit bei der Lackierung erreicht und damit im Rahmen von großindustriellen Lackieranlagen mit entsprechend hohen Durchsatzraten viel Material eingespart und letztlich deutlich ökonomischer und wiederum umweltfreundlicher gearbeitet. Ein wichtiges Ziel der Lackindustrie ist es demnach, eine stetige Erhöhung des nfA beziehungsweise eine Reduzierung der VOC Emissionen bei gleichzeitiger Wahrung der technologischen Eigenschaften der jeweiligen Lackzusammensetzungen, beispielsweise Klarlackbeschichtungszusammensetzungen, zu erreichen.

### Aufgabe der vorliegenden Erfindung

Trotz entsprechender Bemühungen der Automobilindustrie konnten die oben genannten Eigenschaften bei Klarlackbeschichtungszusammensetzungen bis heute nicht zufrieden stellend erzielt werden. Aufgabe der vorliegenden Erfindung war es demzufolge, eine Klarlackbeschichtungszusammensetzung bereitzustellen, die ein gutes Füllvermögen beziehungsweise einen guten Verlauf aufweist und damit zur Herstellung von Beschichtungen auf Substraten, insbesondere aus Metall oder Kunststoff hergestellte Karosserien und Karosserieteilen aus dem Bereich der Automobillackierung, genutzt werden kann. Die Beschichtungen sollten entsprechend einen hohen Glanz und insbesondere ein hervorragendes Erscheinungsbild aufweisen. Zudem war es Aufgabe der Erfindung, den nicht flüchtigen Anteil der Klarlackbeschichtungszusammensetzung bei gleichzeitiger Wahrung der technologischen Eigenschaften, insbesondere der "appearance", erhöhen zu können und damit ein im Vergleich zu technologisch vergleichbaren oder sogar schlechteren Zusammensetzungen verbessertes ökonomisches und ökologisches Profil zu erreichen.

### Erfindungsgemäße Lösung

Es wurde gefunden, dass die genannten Aufgaben gelöst werden konnten durch eine Klarlackbeschichtungszusammensetzung enthaltend
(A) mindestens einen Polyester
   mit einer OH-Zahl von 100 - 220 mg KOH/g, enthaltend
      (A1) 10 bis 20 mol-% mindestens eines acyclischen, aliphatischen, verzweigten Polyols mit zwei Hydroxygruppen,
      (A2) 5 bis 15 mol-% mindestens eines acyclischen, aliphatischen, verzweigten Polyols mit drei Hydroxygruppen,
      (A3) 10 bis 20 mol-% mindestens eines acyclischen, aliphatischen, verzweigten Polyols mit vier Hydroxygruppen,
      (A4) 25 bis 40 mol-% mindestens einer cycloaliphatischen 1,2-Dicarbonsäure und/oder das Anhydrid dieser Dicarbonsäure sowie
      (A5) 20 bis 35 mol-% Isononansäure,
   wobei die angegebenen molaren Anteile jeweils auf den molaren Gesamtanteil der Verbindungen (A1) bis (A5) bezogen sind und dieser molare Gesamtanteil mindestens 70 mol-%, der in dem Polyester (A) enthaltenen Verbindungen ausmacht;
(B) mindestes ein butanolverethertes Melamin-Formaldehyd-Harz mit einer Vernetzungsbeginntemperatur, die zwischen 65°C - 100°C niedriger als die Vernetzungsbeginntemperatur von Hexamethoxymethylmelamin;
(C) mindestes ein butanolverethertes Melamin-Formaldehyd-Harz mit einer Vernetzungsbeginntemperatur, die zwischen 30°C - 60°C niedriger als die Vernetzungsbeginntemperatur von Hexamethoxymethylmelamin;
(D) mindestens eine organische Harnstoffverbindung als Rheologiehilfsmittel und
(E) mindestens einen Säurekatalysator (E).

Diese Klarlackbeschichtungszusammensetzung ist Gegenstand der vorliegenden Erfindung und wird demnach als erfindungsgemäße Klarlackbeschichtungszusammensetzung bezeichnet. Weitere bevorzugte Ausführungsformen gehen aus der folgenden Beschreibung hervor. Die erfindungsgemäße Klarlackbeschichtungszusammensetzung besitzt ein hervorragendes Füllvermögen beziehungsweise einen guten Verlauf, sodass sie zur Herstellung von Beschichtungen geeignet ist, die eine besonders glatte Oberfläche und damit einen hohen Glanz sowie insbesondere ein hervorragendes Erscheinungsbild aufweisen. Zudem weist die Klarlackbeschichtungszusammensetzung im Vergleich zu Zusammensetzungen mit ähnlichen oder sogar schlechteren technologischen Eigenschaften einen erhöhten nicht flüchtigen Anteil auf und zeigt damit ein deutlich verbessertes ökologisches Profil. Die Klarlackbeschichtungszusammensetzung kann zum Aufbau einer Klarlackierung dienen, die entweder für sich allein oder im Rahmen einer Mehrschichtlackierung ein Metall- oder Kunststoffsubstrat bedeckt.

Ebenfalls Gegenstand der vorliegenden Erfindung ist ein Verfahren zur Herstellung der erfindungsgemäßen Klarlackbeschichtungszusammensetzung sowie deren Verwendung zur Herstellung einer Beschichtung beziehungsweise gehärteten Klarlackierung auf einem Substrat. Ebenfalls Gegenstand der vorliegenden Erfindung ist eine Klarlackschicht, die mit der erfindungsgemäßen Klarlackbeschichtungszusammensetzung auf einem Substrat hergestellt wurde.

### Ausführliche Beschreibung der vorliegenden Erfindung

Im Rahmen der vorliegenden Erfindung wurden zur Bestimmung von nicht-flüchtigen Anteilen (nfA, Festkörper) jeweils konstante Bedingungen gewählt, sofern nichts anderes angegeben wurde. Zur Bestimmung des nicht-flüchtigen Anteils wird eine Menge von 2 g der jeweiligen Probe auf einen Festkörperdeckel aufgebracht und für 2 h bei 125°C erhitzt, auf Raumtemperatur abgekühlt und dann zurückgewogen (vgl. ISO 3251). Ermittelt wurde der nicht-flüchtige Anteil beispielsweise von entsprechenden Polymerlösungen beziehungsweise Harzen, die in der erfindungsgemäßen Klarlackbeschichtungszusammensetzung enthalten sind, um dadurch beispielsweise den Gewichtsanteil des jeweiligen Bestandteils an einer Mischung mehrerer Bestandteile oder der gesamten Klarlackbeschichtungszusammensetzung einstellen und bestimmen zu können.

Im Rahmen der Erfindung gibt die Hydroxylzahl beziehungsweise OH-Zahl die Menge Kaliumhydroxid in Milligramm an, welche der bei einer Acetylierung von einem Gramm des jeweiligen Bestandteils gebundenen molaren Menge Essigsäure äquivalent ist. Die Hydroxylzahl wird im Rahmen der vorliegenden Erfindung, sofern nicht etwas anderes angegeben ist, gemäß DIN 53240-2 (Determination of hydroxyl value - Part 2: Method with catalyst) experimentell durch Titration bestimmt.

Im Rahmen der Erfindung gibt die Säurezahl die Menge Kaliumhydroxid in Milligramm an, welche zur Neutralisation von 1 g des jeweiligen Bestandteils notwendig ist. Die Säurezahl wird im Rahmen der vorliegenden Erfindung, sofern nicht etwas anderes angegeben ist, gemäß DIN EN ISO 2114 experimentell durch Titration bestimmt.

Das massenmittlere (M_{w}) und zahlenmittlere (Mₙ) Molekulargewicht wird im Rahmen der vorliegenden Erfindung mittels Gelpermeationschromatographie bei 40°C mit einer Hochdruckflüssigkeitschromatographie-Pumpe und einem Brechungsindexdetektor bestimmt. Als Elutionsmittel wurde Tetrahydrofuran mit einer Elutionsgeschwindigkeit von 1 mL/min verwendet. Die Kalibrierung wird mittels Polystyrol-Standards durchgeführt.

Die Glasübergangstemperatur T_{g} wird im Rahmen der Erfindung experimentell in Anlehnung an DIN 51005 "Thermische Analyse (TA) - Begriffe" und DIN 53765 "Thermische Analyse - Dynamische Differenzkalorimetrie (DDK)" bestimmt. Dabei wird eine Probe von 10 mg in ein Probenpfännchen eingewogen und in ein DSC-Gerät eingeführt. Es wird auf die Starttemperatur abgekühlt und im Anschluss daran ein 1. und 2. Messlauf bei einer Inertgasspülung (N₂) von 50 ml/min mit einer Heizrate von 10 K/min durchgeführt, wobei zwischen den Messläufen wieder auf die Starttemperatur abgekühlt wird. Die Messung erfolgt üblicherweise im Temperaturbereich von etwa 50 °C niedriger als die erwartete Glasübergangstemperatur bis etwa 50 °C höher als die Glasübergangstemperatur. Als Glasübergangstemperatur wird im Rahmen der vorliegenden Erfindung in Anlehnung an DIN 53765, Punkt 8.1, diejenige Temperatur im 2. Messlauf bezeichnet, bei der die Hälfte der Änderung der spezifischen Wärmekapazität (0,5 Delta cₚ) erreicht ist.

Sie wird aus dem DDK-Diagramm (Auftragung des Wärmestroms gegen die Temperatur) ermittelt und ist die Temperatur des Schnittpunkts der Mittellinie zwischen den extrapolierten Basislinien vor und nach dem Glasübergang mit der Messkurve.

Die Vernetzungsbeginntemperatur von Melamin-Formaldehyharzen wird im Rahmen der Erfindung experimentell mittels Dynamisch-Mechanischer Analyse (DMA) bestimmt. Beschrieben ist diese Methode beispielsweise in der DIN EN ISO 6721-1, wobei die Methode in dieser Norm im Rahmen der Bestimmung dynamisch-mechanischer Eigenschaften von Kunststoffen erläutert wird. Bei der DMA werden durch Anwendung einer oszillierenden Kraft auf die Probe frequenz- und temperaturabhängig die viskoelastischen Eigenschaften (das heißt die Steifigkeit, ausgedrückt durch das gemessene Speichermodul E', und die dissipierte Arbeit pro Schwingung, ausgedrückt durch das gemessene Verlustmodul E") der Probe erfasst. Je steifer ein Material ist, desto größer ist der Betrag des Speichermoduls, das heißt das Material setzt seiner elastischen Verformung einen größeren Widerstand entgegen. Für eine Zusammensetzung von vernetzbaren Polymerketten, beispielsweise ein Melamin-Formaldehyharz, steigt die Steifigkeit an, wenn die Vernetzung der einzelnen Polymerketten untereinander beginnt und sich damit aus einer Mischung einzelner Polymerketten ein komplexes Netzwerk beziehungsweise ein Film bildet. Im Rahmen der vorliegenden Erfindung wird mit der DMA durch Belastung der Probe mit einer sinusförmigen Schwingung konstanter Amplitude und Frequenz bei kontinuierlicher Temperaturerhöhung das Speichermodul bestimmt. Die Temperatur, bei der das Speichermodul beginnt anzusteigen, wird im Rahmen der vorliegenden Erfindung als Vernetzungsbeginntemperatur der Melamin-Formaldehyharze bezeichnet. Die Messungen wurden mit einem Gerät des Typs DMTA IV der Firma Rheometric Scientific durchgeführt. Dabei wird 1 g des jeweiligen zu vermessenden Melamin-Formaldehyd-Harzes (Festkörper 50 %, eingestellt mit n-Butanol) auf ein in das Messgerät eingespanntes Glasfasernetz gegeben und bei kontinuierlicher Temperaturerhöhung von 2°C pro Minute bei sinusförmiger Probenbelastung (konstante Frequenz, konstante Amplitude im linearen Messbereich) das Speichermodul E' gemessen. Die Messung erfolgt üblicherweise im Temperaturbereich von etwa 80-100 °C niedriger als die erwartete Vernetzungsbeginntemperatur bis etwa 80-100 °C höher als die Vernetzungsbeginntemperatur. Die Vernetzungsbeginntemperatur wird dann graphisch aus dem Speichermodul/Temperaturdiagramm ermittelt und ist die Temperatur des Schnittpunkts der extrapolierten Basislinie des Speichermoduls vor der einsetzenden Vernetzung und der extrapolierten Geraden, die sich aus dem quasi-linearen Anstiegsbereich des Speichermoduls nach dem Einsetzen der Vernetzung ergibt. Auf diese Weise kann die Vernetzungsbeginntemperatur problemlos auf +/- 1°C genau bestimmt werden.

### Polyester (A)

Der erste erfindungswesentliche Bestandteil der erfindungsgemäßen Klarlackbeschichtungszusammensetzung ist mindestens ein wie unten beschriebener Polyester (A).

Als Polyester wird in der Regel eine polymere organische Verbindung bezeichnet, die unter Einsatz mehrwertiger organischer Polyole und mehrwertiger organischer Carbonsäuren hergestellt wird. Die Polyole und Polycarbonsäuren werden dabei durch Veresterung, das heißt also durch Kondensationsreaktionen, miteinander verknüpft. Entsprechend werden die Polyester in der Regel der Gruppe der Polykondensationsharze zugeordnet. Je nach Art, Funktionalität und eingesetzten Anteilen und Verhältnissen der Ausgangskomponenten werden dabei beispielsweise lineare oder verzweigte Produkte erhalten. Während lineare Produkte vornehmlich beim Einsatz von difunktionellen Ausgangskomponenten (Diole, Dicarbonsäuren) entstehen, wird beispielsweise durch den Einsatz von höherfunktionellen Alkoholen (OH-Funktionalität, das heißt Anzahl OH-Gruppen pro Molekül, größer 2) eine Verzweigung erreicht. Natürlich ist bei der Herstellung auch der anteilige Einsatz von monofunktionellen Komponenten, beispielsweise Monocarbonsäuren, möglich. Zur Herstellung von Polyestern können bekanntermaßen auch statt oder neben den entsprechenden organischen Carbonsäuren, die Anhydride der Carbonsäuren, insbesondere die Anhydride der Dicarbonsäuren, eingesetzt werden. Ebenfalls möglich ist die Herstellung durch den Einsatz von Hydroxycarbonsäuren oder den von den Hydroxycarbonsäuren durch intramolekulare Veresterung abgeleiteten Lactonen.

Ganz allgemein können bei der Herstellung von Polyestern Polycarbonsäuren und Polyole, beispielsweise aliphatische Polycarbonsäuren und aliphatische Polyole zum Einsatz kommen.

Aliphatische Verbindungen sind bekanntermaßen acyclische oder cyclische, gesättigte oder ungesättigte Kohlenstoffwasserstoffverbindungen. Der Begriff aliphatische Verbindung umfasst also acyclische und cyclische Aliphaten und gilt auch im Rahmen der vorliegenden Erfindung als entsprechender Oberbegriff. Im Rahmen der vorliegenden Erfindung werden die nicht cyclischen Aliphaten als acyclische Aliphaten und die cyclischen Aliphaten als Cycloaliphaten bezeichnet. Die acyclischen Aliphaten können linear oder verzweigt sein. Linear bedeutet bekanntermaßen, dass die jeweilige Verbindung keine Verzweigungen hinsichtlich der Kohlenstoffkette aufweist, sondern die Kohlenstoffatome ausschließlich in linearer Abfolge in einer Kette angeordnet sind. Verzweigt beziehungsweise nichtlinear bedeutet damit im Rahmen der vorliegenden Erfindung, dass die jeweils betrachtete Verbindung eine Verzweigung in der Kohlenstoffkette aufweist, das heißt also mindestens ein Kohlenstoffatom der jeweiligen Verbindung ein tertiäres Kohlenstoffatom ist. Als Cycloaliphaten werden bekanntermaßen solche Verbindungen bezeichnet, in denen zumindest ein Teil der vorhandenen Kohlenstoffatome im Molekül so verknüpft sind, dass einer oder mehrere Ringe ausgebildet werden. Natürlich können neben dem einen oder den mehreren Ringen weitere acyclische lineare oder verzweigte aliphatische Gruppen vorhanden sein.

Als aliphatische Polycarbonsäure werden folglich solche Polycarbonsäuren bezeichnet, die neben ihren Carbonsäuregruppen aliphatische Gruppen aufweisen, also aus Carbonsäuregruppen und aliphatischen Gruppen bestehen. Diese Form der Bezeichnung gilt auch für alle weiteren im Rahmen der vorliegenden Erfindung genannten Verbindungsklassen, beispielsweise die bereits genannten Polyole.

Ebenfalls zum Einsatz kommen können aromatische Polycarbonsäuren und aromatische Polyole oder auch Polycarbonsäuren und Polyole, die neben den ihre Verbindungsklasse bezeichnenden funktionellen Gruppen sowohl (lineare, verzweigte und/oder cyclische) aliphatische als auch aromatische Gruppen aufweisen. Ebenso möglich ist der Einsatz von linearen, verzweigten und/oder cyclischen aliphatischen und/oder aromatischen Hydroxycarbonsäuren sowie Lactonen, das heißt also Hydroxycarbonsäuren und Lactonen, die neben den ihre Verbindungsklasse bezeichnenden funktionellen Gruppen lineare, verzweigte und/oder cyclische aliphatische und/oder aromatische Gruppen aufweisen.

Geeignete Diole sind beispielsweise Glykole, wie Ethylenglykol, Propylenglykol, Butylenglykol, Butandiol-1,4, Hexandiol-1,6, Neopentylglykol, und andere Diole, wie 1,4-Dimethylolcyclohexan oder 2-Butyl-2-Ethyl-1,3-Propandiol. Vorzugsweise sind die genannten Diole die einzigen enthaltenen Diole.

Geeignete höherfunktionelle Alkohole (OH-Funktionalität größer 2) sind beispielsweise Trimethylolpropan, Glycerin und Pentaerythrit. Vorzugsweise sind die genannten höherfunktionellen Alkohole die einzigen enthaltenen höherfunktionellen Alkohole.

Die Säurekomponente eines Polyesters umfasst in der Regel Dicarbonsäuren oder ihre Anhydride mit 2 bis 44, bevorzugt 4 bis 36 Kohlenstoffatomen im Molekül. Geeignete Säuren sind beispielsweise o-Phthalsäure, Isophthalsäure, Terephthalsäure, Tetrahydrophthalsäure, Cyclohexandicarbonsäure, Bernsteinsäure, Adipinsäure, Azelainsäure, Sebazinsäure, Maleinsäure, Fumarsäure, Glutarsäure, Hexachlorheptandicarbonsäure, Tetrachlorphthalsäure und/oder dimerisierte Fettsäuren. Anstelle dieser Säuren können auch ihre Anhydride, soweit diese existieren, verwendet werden. Es können auch höherfunktionelle Carbonsäuren mit 3 oder mehr Carboxylgruppen (beziehungsweise die entsprechenden Anhydride), beispielsweise Trimellithsäureanhydrid eingesetzt werden. Häufig werden auch anteilig Monocarbonsäuren, wie beispielsweise ungesättigte Fettsäuren, verwendet. Vorzugsweise sind die genannten Dicarbonsäuren und höherfunktionellen Carbonsäuren die einzigen enthaltenen Dicarbonsäuren und höherfunktionellen Carbonsäuren einschließlich deren Anhydride.

Einsetzbare Hydroxcarbonsäuren sind beispielsweise Hydroxycapronsäure, Hydroxybuttersäure, Hydroxydecansäure und/oder 12-Hydroxystearinsäure. Einsetzbare Lactone sind beispielsweise die an sich bekannten beta-, gamma-, delta- und epsilon-Lactone, insbesondere epsilon-Caprolacton.

Neben den oben beschriebenen monomeren Verbindungen können beispielsweise auch bereits polymere Ausgangsprodukte eingesetzt werden, beispielsweise als Diole die an sich bekannten Polyesterdiole, die durch Umsetzung eines Lactons mit einem zweiwertigen Alkohol erhalten werden.

Die Herstellung von Polyestern weist keine verfahrenstechnischen Besonderheiten auf und erfolgt in der Regel über die an sich üblichen und bekannten Polymerisationsverfahren, insbesondere Polykondensationsverfahren, beispielsweise in Masse oder Lösung bei Temperaturen von vorzugsweise 50 bis 300 °C, wobei gegebenenfalls die hierfür typischen Katalysatoren wie beispielsweise Säuren (beispielsweise konzentrierte Schwefelsäure), Dibutylzinnlaurat oder weitere, beispielsweise unter der Handelsbezeichnung Fascat erhältliche zinnbasierte Katalysatoren zum Einsatz kommen (beispielsweise Fascat 4100). Das aus der Kondensationsreaktionen entstehende Wasser wird typischerweise mit Hilfe eines Wasserabscheiders entfernt. Ein beispielhaftes Herstellverfahren ist den unten angegebenen Beispielen zu entnehmen.

Bei dem mindestens einen in der erfindungsgemäßen Klarlackbeschichtungszusammensetzung enthaltenden Polyester (A) handelt es sich um einen speziellen Polyester, der die oben beschriebenen Verbindungen, insbesondere die monomeren Verbindungen, enthalten kann, jedoch jedenfalls die weiter unten genannten Merkmale aufweisen muss. Der Polyester (A) kann auch unter den oben beschriebenen Bedingungen hergestellt werden. Sofern im Rahmen der vorliegenden Erfindung angegeben ist, dass ein Polymer, beispielsweise der Polyester (A), bestimmte Verbindungen enthält, ist hierunter zu verstehen, dass bei der Herstellung des jeweiligen Polymers, beispielsweise eines Polyesters (A), diese bestimmten Verbindungen als Ausgangsverbindungen eingesetzt werden. Je nach Art der Ausgangsverbindungen erfolgt die jeweilige Umsetzung zum Polymer nach unterschiedlichen Mechanismen. So wird beispielsweise bei der Kondensationsreaktion eines Alkohols und einer Carbonsäure bekanntermaßen für jede ausgebildete Esterbindung ein Molekül Wasser abgespalten. Dieses Molekül Wasser ist dann selbstverständlich nicht mehr in dem hergestellten Polyester vorhanden. Trotzdem enthält der Polyester natürlich, abgesehen von dem Wasser, die beiden Verbindungen, das heißt den Alkohol und die Carbonsäure. Demnach wird der Übersicht halber angegeben, dass das jeweilige Polymer die Verbindungen enthält. Die Bedeutung des Ausdrucks "das Polymer enthält Verbindungen V" ist also gleichzusetzen mit der Bedeutung des Ausdrucks "bei der Herstellung des Polymers wurden Verbindungen V einsetzt".

Der Polyester (A) enthält erfindungsgemäß
(A1) 10 bis 20 mol-% mindestens eines acyclischen, aliphatischen, verzweigten Polyols mit zwei Hydroxygruppen,
(A2) 5 bis 15 mol-% mindestens eines acyclischen, aliphatischen, verzweigten Polyols mit drei Hydroxygruppen,
(A3) 10 bis 20 mol-% mindestens eines acyclischen, aliphatischen, verzweigten Polyols mit vier Hydroxygruppen,
(A4) 25 bis 40 mol-% mindestens einer cycloaliphatischen 1,2-Dicarbonsäure und/oder das Anhydrid dieser Dicarbonsäure sowie
(A5) 20 bis 35 mol-% Isononansäure,
wobei die angegebenen molaren Anteile jeweils auf den molaren Gesamtanteil der Verbindungen (A1) bis (A5) bezogen sind und dieser molare Gesamtanteil mindestens 70 mol-%,vorzugsweise mindestens 85 mol-%, der in dem Polyester (A) enthaltenen Verbindungen (das heißt Ausgangsverbindungen) ausmacht. Ganz besonders bevorzugt besteht der Polyester (A) aus den Verbindungen (A1) bis (A5).

Der mindestens eine Polyester (A) enthält also in jedem Fall die Monocarbonsäure Isononansäure. Er wird demzufolge auch als isononansäuremodifizierter Polyester bezeichnet.

Der Anteil des mindestens einen Polyesters (A) beträgt vorzugsweise 12 bis 45 Gew.-%, insbesondere 15 bis 40 Gew.-%, besonders bevorzugt 18 bis 30 Gew.-%, jeweils bezogen auf die Gesamtmenge der erfindungsgemäßen Klarlackbeschichtungszusammensetzung.

Der mindestens eine Polyester (A) ist OH-funktionell und weist eine OH-Zahl von 100 - 220 mg KOH/g, vorzugsweise 120 - 200 mg KOH/g, ganz besonders bevorzugt von 140 - 180 mg KOH/g, auf.

Der mindestens eine Polyester (A) kann Carboxyfunktionen enthalten. Die Säurezahl ist bevorzugt kleiner 30 mg KOH/g, insbesondere 10 - 15 mg KOH/g.

Der mindestens eine Polyester (A) weist bevorzugt ein gewichtsmittleres Molekulargewicht M_{W} von 2900 bis 4100 g/mol, besonders bevorzugt 3250 bis 3800 g/mol und ein zahlenmittleres Molekulargewicht Mₙ zwischen 1000 bis 1500 g/mol, besonders bevorzugt 1100 bis 1300 g/mol auf.

Bevorzugt ist als Verbindung (A1) 2-Butyl-2-Ethyl-1,3-Propandiol, als Verbindung (A2) Trimethylolpropan, als Verbindung (A3) Pentaerythrit und als Verbindung (A4) Hexahydrophthalsäureanhydrid in dem Polyester (A) enthalten. Dieser Polyester (A) führt überraschenderweise zu ganz ausgezeichneten anwendungstechnischen Eigenschaften der erfindungsgemäßen Klarlackbeschichtungszusammensetzung und führt insbesondere zu einem hohem Glanz und einem sehr gleichmäßigen Erscheinungsbild der mit der Klarlackbeschichtungszusammensetzung hergestellten Beschichtungen.

### Melamin-Formaldehyd-Harze (B) und (C)

Die erfindungsgemäße Klarlackbeschichtungszusammensetzung enthält zudem mindestens ein wie unten definiertes Melamin-Formaldehyd-Harz (B) und mindestens ein davon verschiedenes und wie unten definiertes Melamin-Formaldehyd-Harz (C).

Als Melamin-Formaldehyd-Harze werden Produkte aus Melamin (1,3,5-Triazin-2,4,6-triamin) und maximal 6 Mol Formaldehyd pro Mol bezeichnet. Bei den Melaminharzen allgemein können aber beispielsweise auch Aldehyde mit Kohlenstoffketten, insbesondere Aldehyde mit 2 bis 8 Kohlenstoffatomen verwendet werden. Bevorzugte Aldehyde sind beispielsweise Formaldehyd, Acetaldehyd, Propylaldehyd oder Butyraldehyd, allgemein ganz besonders bevorzugt ist Formaldehyd und damit die Melamin-Formaldehyd-Harze.

Durch Reaktion der Aminogruppen des Melamins mit dem Formaldehyd resultieren methylolgruppenhaltige Reaktionsprodukte, wobei pro Aminogruppe insgesamt 2 Formaldehydmoleküle angelagert werden können beziehungsweise pro N-H-Einheit ein Formaldehyd angelagert werden kann. Beispielsweise aus diesen Methylolaminen können dann durch Kondensationsreaktionen unterschiedliche Addukte gebildet werden, die mehrere Melaminkerne enthalten, wobei diese Kerne dann beispielsweise über entsprechende Etherbrücken verknüpft sind. Melamin-Formaldehyd-Harze sind also aus Molekülen aufgebaut, die einkernig oder mehrkernig sind, das heißt die Moleküle können einen Triazinring ("einkernig") beziehungsweise mehrere Triazinkerne ("mehrkernig") enthalten.

Natürlich können diese Addukte einen unterschiedlichen Methylolierungsgrad aufweisen und damit auch noch freie, reaktive N-H-Einheiten enthalten (iminogruppenhaltige Melamin-Formaldehyd-Harze). Die Melamin-Formaldehyd-Harze mit hohem Gehalt an freien Iminogruppen (so genannte high-imino-Melamin-Formaldehyd-Harze) sind vergleichsweise reaktiv und reagieren (vernetzen) mit sich selbst (Selbstkondensation) oder aber beispielsweise mit einem bestimmten OH-funktionellen Polymer, beispielsweise einem Polyester (A), bei entsprechend konstant gewählten Reaktionsbedingungen (beispielsweise konstanter Temperatur oder bei Einsatz konstanter Mengen eines bestimmten Katalysators) wesentlich schneller als dies bei Melamin-Formaldehyd-Harzen mit hohem Methylolierungsgrad der Fall ist. Entsprechend sind für das Erreichen eines bestimmten Vernetzungsgrads in einem gegebenen Zeitrahmen geringere Temperaturen und/oder Katalysatormengen notwendig. Genauso ist für das Einsetzen einer Vernetzung und/oder Selbstvernetzung bei ansonsten konstanten Bedingungen eine geringere Temperatur notwendig. Der Methylolierungsgrad eines Melaminharzes beschreibt, wie viele der möglichen Methylolierungsstellen des Melamins im Mittel methyloliert sind, das heißt wie viele der insgesamt sechs Wasserstoffatome der primären Aminogruppen des Melamins (1,3,5-Triazin-2,4,6-triamin) durch eine Methylolgruppe ersetzt sind. Ein vollständig methyloliertes, einkerniges Melaminharz weist demzufolge sechs Methylolgruppen pro Triazinring auf (Hexamethoxymethylmelamin). Der Methylolierungsgrad muss demnach immer einen Wert von ≤ 6 einnehmen.

Häufig wird die Reaktivität der Melaminharze durch vollständige oder teilweise Veretherung der Methylolgruppen mit unterschiedlichen Alkoholen modifiziert beziehungsweise herabgesetzt, um beispielsweise die Vernetzungsaffinität zu regulieren und gleichzeitig die Löslichkeit der Harze zu variieren. Zur Veretherung sind ein- oder mehrwertige Alkohole geeignet. Bevorzugt werden einwertige Alkohole zur Veretherung eingesetzt. Beispielsweise können Methanol, Ethanol, n-Butanol, iso-Butanol oder auch Hexanol zur Veretherung eingesetzt werden. Bevorzugt sind in der Regel Methanol, n-Butanol und iso-Butanol. Es können auch Gemische verschiedener Alkohole eingesetzt werden, beispielsweise ein Gemisch aus Methanol und n-Butanol. Dabei beschreibt der Veretherungsgrad eines Melaminharzes dann den Anteil an Methylolgruppen des Melamin-Formaldehyd-Harze, der mit einem Alkohol verethert wurde. Beispiele für einkernige, vollständig methylolierte und vollständig mit Alkoholen veretherte Melamin-Formaldehyd-Harze sind Hexamethoxybutylmelamin oder Hexamethoxymethylmelamin (HMMM).

Bekanntermaßen kann das Molekulargewicht eines Melamin-Formaldehyd-Harzes ebenfalls die Reaktivität, insbesondere die Reaktivität zur Selbstkondensation und/oder die Vernetzungsreaktivität mit beispielsweise OH-funktionellen Polymeren, beeinflussen. So haben höhermolekulare (beispielsweise mehrkernige Melamin-Formaldehyd-Harze) in der Regel eine höhere Reaktivität als niedrigmolekulare (beispielsweise einkernige Melamin-Formaldehyd-Harze).

Die beschriebenen Melamin-Formaldehyd-Harze können bekanntermaßen von verschiedenen Anbietern erhalten werden. Diese Melamin-Formaldehyd-Harze, gegebenenfalls gelöst in entsprechenden organischen Lösemitteln, beispielsweise n-Butanol, können dann direkt in Beschichtungszusammensetzungen, beispielsweise Lacken, eingesetzt werden. Bekannte Produkttypen sind beispielsweise von Cytec (beispielsweise Produktlinie Cymel^{®}) oder BASF (beispielsweise Produktlinie Luwipal^{®}) erhalten werden. Dabei sind beispielsweise Produkte mit unterschiedlichem Methyolierungsgrad, Veretherungsgrad oder Kondensationsgrad (einkernig oder mehrkernig) erhältlich.

In der erfindungsgemäßen Klarlackbeschichtungszusammensetzung sind Melamin-Formaldehyd-Harze einzusetzen, die mit Butanol, bevorzugt n-Butanol, verethert sind. Das heißt, dass zumindest ein Teil der vorhandenen Methylolgruppen mit Butanol, bevorzugt n-Butanol, verethert ist (butanolveretherte Melamin-Formaldehyd-Harze). Gleichzeitig müssen Melamin-Formaldehyd-Harze eingesetzt werden, die eine hohe Reaktivität aufweisen. Wie oben beschrieben, lassen sich hohe Reaktivitäten beispielsweise durch einen hohen Gehalt nicht methylolierter N-H-Einheiten (high-imino-Melamin-Formaldehyd-Harze) erzielen. Auch die bereits oben genannte Erhöhung des Molekulargewichts kann zu einer Erhöhung der Reaktivität beitragen.

Demzufolge sind das mindestens eine Melamin-Formaldehyd-Harz (B) und das mindestens eine Melamin-Formaldehyd-Harz (C) butanolveretherte Melamin-Formaldehyd-Harze. Die Reaktivität beider Harze (B) und (C) ist signifikant höher als bei den allgemein als niedrig reaktiv bekannten Melamin-Formaldehyd-Harzen, die einen hohen Methylolierungs- und Veretherungsgrad aufweisen, beispielsweise HMMM. Die Harze (B) und (C) unterscheiden sich jedoch anhand ihrer Reaktivität. Dabei ist das Harz (B) reaktiver als das Harz (C). Es hat sich überraschenderweise gezeigt, dass gerade durch den Einsatz zweier unterschiedlich reaktiver Melamin-Formaldehyd-Harze die erfindungsgemäßen Aufgaben gelöst werden und insbesondere ein hervorragendes Erscheinungsbild der letztlich resultierenden Lackschicht erzielt wird. Die Reaktivität eines Melamin-Formaldehyd-Harzes wird im Rahmen der vorliegenden Erfindung anhand der Vernetzungsbeginntemperatur festgelegt, wobei niedrigere Vernetzungsbeginntemperaturen selbstverständlich eine höhere Reaktivität bedeuten. Die Vernetzungsbeginntemperatur wird im Rahmen der vorliegenden Erfindung anhand der weiter oben beschriebenen, dem Fachmann auf dem Gebiet an sich bekannten Messmethode der Dynamisch-Mechanischen Analyse (DMA) bestimmt. Dabei wird die Vernetzungsbeginntemperatur der Melaminharze (B) und (C) erfindungsgemäß in Relation zu einem Standard, nämlich dem einkernigen, vollmethylolierten und vollveretherten HMMM, angegeben.

Die Vernetzungsbeginntemperatur des mindestens einen Melamin-Formaldehyd-Harzes (B) ist zwischen 65°C - 100°C, bevorzugt zwischen 70°C - 90°C, niedriger als die Vernetzungsbeginntemperatur von HMMM.

Die Vernetzungsbeginntemperatur des mindestens einen Melamin-Formaldehyd-Harzes (C) ist zwischen 30°C - 60°C, bevorzugt zwischen 40°C - 55°C, niedriger als die Vernetzungsbeginntemperatur von HMMM.

Das als Referenz dienende HMMM kann beispielsweise ebenfalls als Handelsprodukt erhalten werden. Insbesondere kann es sich um Luwipal^{®} 066 (BASF) handeln.

Wie bereits beschrieben, bestimmt sich die Reaktivität von Melamin-Formaldehyd-Harzen insbesondere durch den Methylolierungsgrad beziehungsweise den Anteil freier Iminogruppen. Die Harze (B) und (C) sind demnach in der Regel als high-imino-Melamin-Formaldehyd-Harze zu bezeichnen. Ein typisches, im Handel erhältliches Melamin-Formaldehyd-Harz (B) ist das Luwipal^{®} 014 (BASF). Ein typisches, im Handel erhältliches Melamin-Formaldehyd-Harz (C) ist das Luwipal^{®} 018 (BASF).

Der Anteil des mindestens einen Melamin-Formaldehyd-Harzes (B) beträgt vorzugsweise 2 bis 10 Gew.-%, insbesondere 3 bis 8 Gew.-%, besonders bevorzugt 4 bis 6 Gew.-%, jeweils bezogen auf die Gesamtmenge der erfindungsgemäßen Klarlackbeschichtungszusammensetzung.

Der Anteil des mindestens einen Melamin-Formaldehyd-Harzes (C) beträgt vorzugsweise 5 bis 20 Gew.-%, insbesondere 7,5 bis 17,5 Gew.-%, besonders bevorzugt 10 bis 15 Gew.-%, jeweils bezogen auf die Gesamtmenge der erfindungsgemäßen Klarlackbeschichtungszusammensetzung.

Der Anteil des Harzes (C) ist bevorzugt größer als der Anteil des Harzes (B).

Die erfindungsgemäße Klarlackbeschichtungszusammensetzung kann neben den Melamin-Formaldehyd-Harzen (B) und (C) auch noch weitere Melaminharze enthalten.

Weitere Melaminharze, die insbesondere vorteilhaft im Rahmen der vorliegenden Erfindung zum Einsatz kommen können, sind neben von den Harzen (B) und (C) verschiedene Melamin-Formaldehyd-Harze die formaldehydfreien Alkoxycarbonylaminotriazine, insbesondere die Tris(alkoxycarbonylamino)-1,3,5-triazine (TACT). Bei diesen Melaminharzen handelt es sich um Melaminaddukte, die statt der gegebenenfalls veretherten Methylolgruppen carbamatfunktionell sind. So ist beispielsweise bei den bevorzugten Tris(alkoxycarbonylamino)-1,3,5-triazinen jede primäre Aminogruppe eines Melamins mit einer Carbamateinheit funktionalisiert.

Bevorzugt enthält die erfindungsgemäße Klarlackbeschichtungszusammensetzung also mindestens ein Tris(alkoxycarbonylamino)-1,3,5-triazin (TACT). Besonders bevorzugte Tris(alkoxycarbonylamino)-1,3,5-triazine besitzen eine Struktur der folgenden Formel (I): 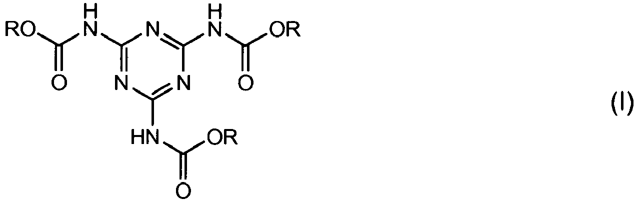 mit R = CₙH₂ₙ₊₁ mit n = 1 bis 10, insbesondere Methyl oder Butyl.

Sofern mindestens ein Tris(alkoxycarbonylamino)-1,3,5-triazin, insbesondere mindestens ein TACT der Formel (I), vorhanden ist, hat es bevorzugt einen Anteil von 0,5 bis 10 Gew.-%, insbesondere 0,8 bis 7,5 Gew.-%, besonders bevorzugt 1 bis 5 Gew.-%, jeweils bezogen auf die Gesamtmenge der erfindungsgemäßen Klarlackbeschichtungszusammensetzung.

Die Mengen der Melamin-Formaldehyd-Harze (B) und (C) sowie der gegebenenfalls vorhandenen Tris(alkoxycarbonylamino)-1,3,5-triazine (TACT) sind im Rahmen der oben angegebenen Anteilsbereiche vorzugsweise so zu wählen, dass im Falle einer solchen Kombination das Gewichtsverhältnis der Melamin-Formaldehyd-Harze (B) und (C) zu den Tris(alkoxycarbonylamino)triazinen im Bereich von 2:1 bis 15:1, insbesondere von 4:1 bis 12:1, ganz besonders bevorzugt von 6:1 bis 10:1 liegt.

### Organische Harnstoffverbindung als Rheologiehilfsmittel (D)

Die erfindungsgemäße Klarlackbeschichtungszusammensetzung enthält mindestens eine organische Harnstoffverbindung (D) als Rheologiehilfsmittel.

Bei diesen Harnstoffverbindungen handelt es sich vorzugsweise um Additionsprodukte eines oder mehrerer Polyisocyanate, insbesondere einem Polyisocyanat, mit einem oder mehreren Aminen, insbesondere einem oder mehreren Monoamin, besonders bevorzugt einem Monoamin.

Als Polyisocyanate können im Prinzip alle mindestens zwei Isocyanatgruppen pro Molekül enthaltende organischen Verbindungen eingesetzt werden. Es können auch isocyanatgruppenhaltige Reaktionsprodukte aus beispielsweise Polyolen und Polyaminen und Polyisocyanaten eingesetzt werden. Vorzugsweise werden Diisocyanate, ganz besonders bevorzugt aliphatische Diisocyanate, insbesondere Hexamethylendiisocyanat eingesetzt. Als Beispiele für einsetzbare Polyisocyanate werden genannt: Tetramethylen-1,4-diisocyanat, Hexamethylen-1,6-diisocyanat, Cyclohexyl-1,4-diisocyanat, Dicyclohexylmethan-4,4-diisocyanat, 1,5-Dimethyl-(2,4-omega-diisocyanato-ethyl)-benzol, 1,3,5-Trimethyl-(2,4-omega-diisocyanato-methyl)-benzol, 1,3,5-Triethyl-(2,4-omega-diisocyanato-methyl)-benzol, das Trimere des Hexamethylen-1,6-diisocyanats, Isophorondiisocyanat, 2,4-Toluoldiisocyanat, 2,6-Toluoldiisocyanat, Isophorondiisocyanat. Ganz besonders bevorzugt ist Hexamethylen-1,6-diisocyanat.

Als Amine werden vorzugsweise primäre Monoamine, insbesondere araliphatische oder aliphatische primäre Monoamine, eingesetzt. Als Beispiele für einsetzbare Amine werden genannt: Benzylamin, Ethylamin, Methoxypropylamin, n-Propylamin, Isopropylamin, n-Butylamin, Isobutylamin, tert-Butylamin, Pentylamin, n-Hexylamin, n-Octylamin, iso-Nonanylamin, iso-Tridecylamin, n-Decylamin, Stearylamin oder auch Ethylendiamin. Ganz besonders bevorzugt ist Benzylamin.

Die organische Harnstoffverbindung (D) wird vorzugsweise in Form einer Paste gemischt mit mindestens einem typischen wie weiter unten beschriebenen organischen Lösemittel sowie mindestens einem Polyester, beispielsweise einem Polyester (A), und/oder einem (Meth)Acrylat(co)polymerisat, bevorzugt einem wie unten beschriebenen (Meth)Acrylat(co)polymerisat (DD), in der erfindungsgemäßen Klarlackbeschichtungszusammensetzung eingesetzt. So kann die Herstellung der Harnstoffverbindung beispielsweise direkt in Gegenwart eines Polyesters und/oder eines (Meth)Acrylat(co)polymerisats erfolgen. Dabei wird beispielsweise so vorgegangen, dass das aliphatische primäre Monoamin zu einer Lösung eines (Meth)Acrylat(co)polymerisats und/oder Polyesters in einem organischen Lösemittel beziehungsweise in einem Gemisch aus organischen Lösemitteln gegeben wird und dann das Polyisocyanat zugegeben wird. Die in Frage kommenden organischen Lösemittel sind weiter unten beschrieben und werden insbesondere so ausgewählt, dass sie keine störenden Wechselwirkungen mit den bei der Reaktion vorliegenden Bestandteilen, das heißt also mit dem mindestens einen Amin, dem mindestens einen Polyisocyanat und dem mindestens einen (Meth)Acrylat(co)polymerisat und/oder Polyesters, eingehen. Die weiter unten beschriebenen, bevorzugten Anteile der Harnstoffverbindung an der Klarlackbeschichtungszusammensetzung beziehen sich allerdings auch im Falle einer Paste ausschließlich auf die Harnstoffverbindung und nicht auf die Mischung aus Harnstoffverbindung und (Meth)Acrylat(co)polymerisat und/oder Polyester. Die tatsächliche Menge an Harnstoffverbindung kann damit beispielsweise in einfacher Weise durch die eingesetzten Mengen Polyisocyanat und Amin berechnet werden.

Die so erhaltene Paste, das heißt die Mischung aus harnstoffgruppenhaltigem Rheologiehilfsmittel und (Meth)Acrylat(co)polymerisat und/oder Polyester, bevorzugt (Meth)Acrylat(co)polymerisat, mit organischen Lösemitteln kann dann direkt in der erfindungsgemäßen Klarlackbeschichtungszusammensetzung eingesetzt werden.

Harnstoffverbindungen als Additionsprodukt eines Polyisocyanats und Aminen als Mischungen mit beispielsweise (Meth)Acrylat(co)polymerisaten oder Polyestern sind beispielsweise auch unter den Handelsnamen Setalux^{®} und Setal^{®} (Firma Nuplex Resins) erhältlich und können ohne weiteres in der erfindungsgemäßen Klarlackbeschichtungszusammensetzung eingesetzt werden.

Ganz besonders bevorzugt wird die organische Harnstoffverbindung (D) als Paste, gemischt mit mindestens einem organischen Lösemittel und mindestens einem wie unten beschriebenen (Meth)Acrylat(co)polymerisat (DD), eingesetzt.

Der Anteil der mindestens einen organischen Harnstoffverbindung (D) als Rheologiehilfsmittel beträgt vorzugsweise 0,1 bis 4 Gew.-%, insbesondere 0,2 bis 3 Gew.-%, besonders bevorzugt 0,3 bis 2 Gew.-%, ganz besonders bevorzugt 0,4 bis 1 Gew.-%, jeweils bezogen auf die Gesamtmenge der Klarlackbeschichtungszusammensetzung.

### (Meth)Acrylat(co)polymerisat (DD)

Die erfindungsgemäße Klarlackbeschichtungszusammensetzung enthält bevorzugt mindestens ein wie im folgenden beschriebenes (Meth)Acrylat(co)polymerisat (DD). Wie oben beschrieben, enthält beispielsweise die bevorzugt einzusetzende Paste der mindestens einen Harnstoffverbindung (D) bevorzugt mindestens ein solches (Meth)Acrylat(co)polymerisat (DD). Das (Meth)Acrylat(co)polymerisat (DD) kann jedoch selbstverständlich auch ohne vorhergehende Vermischung mit einer Harnstoffverbindung (D) zu einer Paste in der Klarlackbeschichtungszusammensetzung eingesetzt werden beziehungsweise in dieser enthalten sein.

Unter (Meth)Acrylat(co)polymerisat wird bekanntermaßen eine polymere organische Verbindung verstanden, die sich aus unterschiedlichen Acrylat- und/oder Methacrylatmonomeren zusammensetzt. Die Bezeichnung (Meth)acrylat steht im Rahmen der Erfindung für Acrylate und/oder Methacrylate beziehungsweise solche Verbindungen, die Acrylate und/oder Methacrylate beinhalten beziehungsweise aus diesen aufgebaut sind. Als Beispiele für solche Acrylat- und Methacrylatmonomere sind unterschiedliche Alkyl(meth)acrylate und Cycloalkyl(meth)acrylate zu nennen, wie z. B. die dem Fachmann bekannten Verbindungen Ethylacrylat, Ethylmethacrylat, Propylacrylat, Propylmethacrylat, Isopropylacrylat, Isopropylmethacrylat, Butylacrylat, Butylmethacrylat, Isobutylacrylat, Isobutylmethacrylat, tert-Butylacrylat, tert-Butylmethacrylat, Amylacrylat, Amylmethacrylat, Hexylacrylat, Hexylmethacrylat, Ethylhexylacrylat, Ethylhexylmethacrylat, 3,3,5-Trimethylhexylacrylat, 3,3,5-Trimethylhexylmethacrylat, Stearylacrylat, Stearylmethacrylat, Laurylacrylat oder Laurylmethacrylat, Cycloalkylacrylate sowie Cyclopentylacrylat, Cyclopentylmethacrylat, Isobornylacrylat, Isobornylmethacrylat, Cyclohexylacrylat und Cyclohexylmethacrylat.

Das (Meth)Acrylat(co)polymerisat (DD) ist OH-funktionell und weist eine OH-Zahl von 60 - 200 mg KOH/g, vorzugsweise 70 - 180 mg KOH/g, ganz besonders bevorzugt von 90 - 170 mg KOH/g, auf. Dementsprechend sind in das Polymergerüst bestimmte Anteile solcher Acrylat- und Methacrylatmonomere eingebaut, die OH-Gruppen aufweisen und damit die OH-Funktionalität des (Meth)Acrylat(co)polymerisats (DD) ausmachen.

Als hydroxylgruppenhaltige Monomerbausteine zur Herstellung der (Meth)Acrylat(co)polymerisate (DD) werden Hydroxyalkyl(meth)acrylate, wie beispielsweise 2-Hydroxyethylacrylat, 2-Hydroxyethylmethacrylat, 2-Hydroxypropylacrylat, 2-Hydroxypropylmethacrylat, 3-Hydroxypropylacrylat, 3-Hydroxypropylmethacrylat, 3-Hydroxybutylacrylat, 3-Hydroxybutylmethacrylat sowie insbesondere 4-Hydroxybutylacrylat und/oder 4-Hydroxybutylmethacrylat, eingesetzt. Als weitere Monomerbausteine für die (Meth)Acrylat(co)polymerisate (DD) können vinylaromatische Kohlenwasserstoffe, wie Vinyltoluol, alpha-Methylstyrol oder insbesondere Styrol, Amide oder Nitrile der Acryl- oder Methacrylsäure, Vinylester oder Vinylether, sowie in untergeordneten Mengen insbesondere Acryl- und/oder Methacrylsäure eingesetzt werden.

Das mindestens eine (Meth)Acrylat(co)polymerisat (DD) weist eine Glasübergangstemperatur T_{g} von -40°C. bis 70°C, vorzugsweise von -35°C bis 50°C, ganz besonders bevorzugt von -35°C bis 35°C, auf. Wie dem Fachmann auf dem Gebiet bekannt ist, bestimmt sich die Glasübergangstemperatur von (Meth)Acrylat(co)polymerisaten beispielsweise durch die Art der enthaltenen Monomere und deren Anteilen am Polymer. Eine entsprechende Auswahl kann vom Fachmann ohne größeren Aufwand getroffen werden.

Das Molekulargewicht des (Meth)Acrylat(co)polymerisats (DD) liegt in den dem Fachmann geläufigen Bereichen und ist letztlich keinen Beschränkungen unterworfen. Bevorzugt sind gewichtsmittlere Molekulargewichte M_{w} zwischen 7000 und 15000 g/mol, insbesondere 8000 und 13000 g/mol und zahlenmittlere Molekulargewichte Mₙ zwischen 2000 bis 4000 g/mol, insbesondere zwischen 2500 bis 3500 g/mol.

Die Säurezahl des (Meth)Acrylat(co)polymerisats (DD) liegt vorzugsweise zwischen 0 - 50 mg KOH/g, insbesondere zwischen 0 - 30 mg KOH/g.

Als (Meth)Acrylat(co)polymerisate (DD) können sowohl übliche im Handel erhältliche als auch selbst hergestellte (Meth)Acrylat(co)polymerisate verwendet werden. Als handelsübliche (Meth)Acrylat(co)polymerisate (DD) sind beispielsweise Polyacrylate der Produktreihe "Macrynal" (Cytec Surface Specialities) oder das Handelsprodukt Setalux 1756 VV-65 (Nuplex Resins) zu nennen.

Die Herstellung der (Meth)Acrylat(co)polymerisate (DD) weist keine verfahrenstechnischen Besonderheiten auf, sondern erfolgt beispielsweise mit Hilfe der auf dem Kunststoffgebiet üblichen und bekannten Methoden der kontinuierlichen oder diskontinuierlichen radikalisch initiierten Copolymerisation in Masse, Lösung, Emulsion, Miniemulsion oder Mikroemulsion unter Normaldruck oder Überdruck in Rührkesseln, Autoklaven, Rohrreaktoren, Schlaufenreaktoren oder Taylorreaktoren bei Temperaturen von vorzugsweise 50 bis 200 °C.

Beispiele geeigneter Copolymerisationsverfahren werden in den Patentanmeldungen DE 197 09 465 A1, DE 197 09 476 A1, DE 28 48 906 A1, DE 195 24 182 A1, DE 198 28 742 A1, DE 196 28 143 A1, DE 196 28 142 A1, EP 0 554 783 A1, WO 95/27742 A1, WO 82/02387 A1 oder WO 98/02466 A1 beschrieben.

Beispiele geeigneter radikalischer Initiatoren sind Dialkylperoxide, wie Di- tert.-Butylperoxid oder Dicumylperoxid, Hydroperoxide, wie Cumolhydroperoxid oder tert.-Butylhydroperoxid, Perester, wie tert.-Butylperbenzoat, tert.-Butylperpivalat, tert.-Butylper-3, 5, 5-trimethyl- hexanoat oder tert.-Butylper-2-ethylhexanoat, Peroxodicarbonate, Kalium-, Natrium- oder Ammoniumperoxodisulfat, Azoinitiatoren, beispielsweise Azodinitrile wie Azobisisobutyronitril, C-C-spaltende Initiatoren wie Benzpinakolsilylether, oder eine Kombination eines nicht oxidierenden Initiators mit Wasserstoffperoxid. Es können auch Kombinationen der vorstehend beschriebenen Initiatoren eingesetzt werden.

Weitere Beispiele geeigneter Initiatoren werden in der deutschen Patentanmeldung DE 196 28 142 A1, Seite 3, Zeile 49, bis Seite 4, Zeile 6, beschrieben. Des Weiteren können Thiocarbonylthio-Verbindungen oder Mercaptane wie Dodecylmercaptan als Kettenübertragungsmittel oder Molekulargewichtsregler verwendet werden.

Der Anteil des mindestens einen (Meth)Acrylat(co)polymerisats (DD) beträgt bevorzugt 5 bis 20 Gew.-%, insbesondere 6 bis 15 Gew.-%, besonders bevorzugt 7,5 bis 12,5 Gew.-%, jeweils bezogen auf die Gesamtmenge der erfindungsgemäßen Klarlackbeschichtungszusammensetzung.

Die erfindungsgemäße Klarlackbeschichtungszusammensetzung enthält in einer besonders bevorzugten Ausführungsform mindestens zwei (Meth)Acrylat(co)-polymerisate (DD), wobei mindestens eines der beiden Acrylate eine T_{g} von -35°C bis 35°C, eine OH-Zahl von 90 - 170 mg KOH/g, eine Säurezahl von 0 - 30 mg KOH/g, ein zahlenmittleres Molekulargewicht Mₙ von 2000 - 4000 g/mol und ein massenmittleres Molekulargewicht von 7000 - 15000 g/mol aufweist.

### Säurekatalysator (E)

Die erfindungsgemäße Klarlackbeschichtungszusammensetzung enthält zudem mindestens einen Säurekatalysator (E). Bekanntermaßen werden solche Katalysatoren beispielsweise in Beschichtungszusammensetzungen, in denen die darin eingesetzten Harze bei der Härtung durch entsprechende Polykondensationsreaktionen vernetzen, eingesetzt. Beispielhafte Harze sind dabei insbesondere hydroxyfunktionelle Harze wie Polyester und/oder (Meth)Acrylat(co)polymerisate sowie Melamin-Formaldehyd-Harze. Durch den Einsatz der Katalysatoren und deren bekannte Wirkungsmechanismen (Säurekatalyse) werden die Vernetzungsreaktionen katalysiert und dadurch die Einbrenntemperaturen erniedrigt, die Einbrennzeiten verkürzt oder aber die vollständige Härtung überhaupt erst ermöglicht.

Bei den Säurekatalysatoren (E) handelt es sich bevorzugt um organische Säuren, insbesondere Sulfonsäuren, Carbonsäuren, Phosphorsäuren und/oder saure Phosphorsäureester. Ganz besonders bevorzugt sind Sulfonsäuren.

Die genannten Säurekatalysatoren werden bevorzugt in blockierter Form eingesetzt. Dadurch wird bekanntermaßen beispielsweise die Lagerstabilität der Zusammensetzungen, die die Katalysatoren enthalten, verbessert. Geeignete Blockierungsmittel sind beispielsweise Amine wie bevorzugt tertiär alkylierte oder heterocyclische Amine.

Geeignete Sulfonsäuren sind beispielsweise Dodecylbenzolsulfonsäure (DDBSA), Dinonylnaphthalendisulfonsäure (DNNSA), para-Toluolsulfonsäure (pTSA) sowie blockierte Sulfonsäurekatalysatoren wie blockierte DDBSA, blockierte DNNSA oder blockierte p-TSA.

Die Blockierung der Sulfonsäurekatalysatoren erfolgt dabei beispielsweise ebenfalls über Amine wie bevorzugt tertiär alkylierte oder heterocyclische Amine, wie beispielsweise 2-Amino-2-methylpropanol, Diisopropanolamin, Dimethyloxazolidin oder Trimethylamin. Möglich ist auch der Einsatz von kovalentblockierten Sulfonsäurekatalysatoren. Hierbei werden zur Blockierung kovalent bindende Blockierungsmittel wie beispielsweise Epoxy- oder Epoxy-Isocyanat-Verbindungen eingesetzt. Solche blockierten Sulfonsäure-Katalysatoren werden detailliert in der Patentveröffentlichung U.S. Pat. No. 5.102.961 beschrieben.

Bevorzugt werden Amin-blockierte Sulfonsäurekatalysatoren eingesetzt. Solche Katalysatoren sind beispielsweise unter dem Handelsnamen CYCAT^{®} (Firma Cytec) oder auch Nacure^{®} (Firma King Industries) erhältlich und können direkt in der erfindungsgemäßen Klarlackbeschichtungszusammensetzung eingesetzt werden.

Der oder die Säurekatalysatoren (E), insbesondere Sulfonsäurekatalysatoren, werden in den üblichen und bekannten Mengen eingesetzt. Bevorzugt werden 0,01 bis 3 Gew.-%, insbesondere 0,05 bis 2 Gew.-%, ganz besonders bevorzugt 0,1 bis 1 Gew.-%, jeweils bezogen auf die Gesamtmenge der Klarlackbeschichtungszusammensetzung, eingesetzt.

### Weitere mögliche Bestandteile der erfindungsgemäßen Klarlackbeschichtungszusammensetzung

Die erfindungsgemäße Klarlackbeschichtungszusammensetzung kann zudem mindestens ein organisches Lösemittel enthalten. Bevorzugt enthält sie ein solches Lösemittel, das heißt sie ist lösemittelhaltig.

Als organische Lösemittel sind insbesondere solche geeignet, die in der Klarlackbeschichtungszusammensetzung chemisch inert gegenüber den Verbindungen (A), (B), (C), (D), (DD), (E) und (F) sowie sonstigen gegebenenfalls vorhandenen Bestandteilen sind und die auch bei der Härtung der aus der erfindungsgemäßen Klarlackbeschichtungszusammensetzung hergestellten Klarlackierung nicht mit (A), (B), (C), (D), (DD), (E) und (F) sowie sonstigen gegebenenfalls vorhandenen Bestandteilen reagieren. Der Fachmann kann geeignete Lösemittel leicht anhand ihres bekannten Lösevermögens und ihrer Reaktivität auswählen.

Beispiele für solche Lösemittel sind aliphatische und/oder aromatische Kohlenwasserstoffe wie Butylglycol, Toluol, Xylol, Solventnaphtha, Solvesso 100, oder Hydrosol® (Fa. ARAL), Ketone, wie Aceton, Methylethylketon oder Methylamylketon, Ester, wie Ethylacetat, Butylacetat, Butylglycolacetat, Pentylacetat oder Ethylethoxypropionat, Ether, Alkohole wie Butanol und Butyldiglycol oder Mischungen aus den vorgenannten Lösemitteln.

Der Anteil des mindestens einen organischen Lösemittels kann breit variieren und kann beispielsweise im Bereich zwischen 20 bis 65 Gew.-%, bezogen auf die Gesamtmenge der Klarlackbeschichtungszusammensetzung, liegen. Bevorzugt liegt er zwischen 25 bis 60 Gew.-%, insbesondere zwischen 30 und 55 Gew.-%. Ein Vorteil der erfindungsgemäßen Klarlackbeschichtungszusammensetzung ist es allerdings, dass sie im Vergleich zu bekannten lösemittelhaltigen Klarlackbeschichtungszusammensetzungen, die ähnliche oder sogar schlechtere technologische Eigenschaften (beispielsweise Glanz oder "appearance") aufweisen, niedrigere Gehalte an organischen Lösemitteln enthalten kann. Auf diese Weise kann bei gleichzeitigem Erhalt beziehungsweise bei Verbesserung der technologischen Eigenschaften beispielsweise auch eine Erhöhung des nfA stattfinden, wodurch letztlich Material eingespart und damit deutlich ökonomischer und wiederum umweltfreundlicher gearbeitet werden kann.

Der Festkörper beziehungsweise nfA der erfindungsgemäßen Klarlackbeschichtungszusammensetzung liegt vorzugsweise zwischen 35 und 80 %, insbesondere zwischen 40 und 75 %, ganz bevorzugt zwischen 45 Gew.-% bis 70 %.

Die beschriebenen Bestandteile (A), (B), (C), (D), und (E) machen bevorzugt mehr als 30 Gew.-%, insbesondere mehr als 35 Gew.-%, der Gesamtmenge der erfindungsgemäßen Klarlackbeschichtungszusammensetzung aus. Ist ein organisches Lösemittel enthalten, was bevorzugt ist, so machen die beschriebenen Bestandteile (A), (B), (C), (D), (E) und das Lösemittel insbesondere mehr als 70 Gew.-%, bevorzugt mehr als 75 Gew.-%, der Gesamtmenge der erfindungsgemäßen Klarlackbeschichtungszusammensetzung aus. Für den Fall, dass zusätzlich noch der Bestandteil (DD) vorhanden ist, einer erfindungsgemäß bevorzugten Variante, machen die Bestandteile (A), (B), (C), (D), (DD), (E) und das Lösemittel insbesondere mehr als 85 Gew.-%, bevorzugt mehr als 90 Gew.-%, der Gesamtmenge der erfindungsgemäßen Klarlackbeschichtungszusammensetzung aus.

Dies bedeutet insbesondere, dass die erfindungsgemäße Klarlackbeschichtungszusammensetzung mindestens einen weiteren Bestandteil, beispielsweise ein übliches und wie weiter unten beschriebenes Lackadditiv in üblichen Mengen von weniger als 10 Gew.-%, insbesondere weniger als 5 Gew.-%, enthalten kann.

Als weitere Bestandteile können beispielsweise von den Polyestern (A), (Meth)Acrylat(co)polymerisaten (DD) und den Melaminharzen (B) und (C) verschiedene, weitere organische polymere Verbindungen enthalten sein. Bei den genannten, gegebenenfalls vorhandenen Bestandteilen kann es sich beispielsweise um statistisch, alternierend und/oder blockartig aufgebaute, lineare, verzweigte und/oder kammartig aufgebaute (Co)polymerisate mindestens einer monomeren Verbindung handeln. In Frage kommen letztlich, abgesehen von den weiter oben beschriebenen Polyestern (A), (Meth)Acrylat(co)polymerisaten (DD) und den Melaminharzen (B) und (C), alle typischen organischen Verbindungen, die dem Fachmann in diesem Zusammenhang bekannt sind.

Enthalten sein können insbesondere weitere statistisch, alternierend und blockartig aufgebaute, lineare, verzweigte und/oder kammartig aufgebaute (Co)polymerisate von ethylenisch ungesättigten Monomeren. Neben den genannten (Meth)Acrylat(co)polymerisaten (DD) können beispielsweise auch weitere, von den (Meth)Acrylat(co)polymerisaten (DD) verschiedene (Meth)Acrylat(co)polymerisate in den Klarlackbeschichtungsmittelzusammensetzungen enthalten sein.

Beispiele weiterer, geeigneter (Co)polymerisate von ethylenisch ungesättigten Monomeren sind neben den bereits ausführlich beschriebenen (Meth)acrylat(co)polymerisaten auch partiell verseifte Polyvinylester.

Enthalten sein können auch weitere Polyadditionsharze und/oder Polykondensationsharze. Beispiele geeigneter Polyadditionsharze und/oder Polykondensationsharze sind von den Polyestern (A) verschiedene Polyester, Alkyde, Polyurethane, Polylactone, Polycarbonate, Polyether, Epoxidharz-Amin-Addukte, Polyamide, Polyimide, Polyester-Polyurethane, Polyether-Polyurethane und Polyester-Polyether-Polyurethane. Enthalten sein können beispielsweise auch von den Melamin-Formaldehyd-Harzen (B) und (C) und TACT verschiedene Aminoharze wie die an sich bekannten Harnstoffharze und Thioharnstoffharze oder auch Benzoguanamin-Formaldehyd-Harze und Acetoguanamin-Formaldehydharze.

Ebenfalls in der erfindungsgemäßen Klarlackbeschichtungszusammensetzung enthalten sein können beispielsweise blockierte organische Polyisocyanate. Im Prinzip können dabei alle mindestens zwei Isocyanatgruppen pro Molekül enthaltende organischen Verbindungen eingesetzt werden, beispielsweise die weiter oben genannten Polyisocyanate. Typische Blockierungsmittel sind in diesem Zusammenhang beispielsweise Phenole, Alkohole, Oxime, Pyrazole, Amine und CHacide Verbindungen wie Malonsäurediethylester, insbesondere Caprolactam, Butanonoxim, Acetonoxim, Malonsäurediethylester, Dimethylpyrazol oder Phenol. Die Blockierungsreaktion wird typischerweise durch Umsetzung der freien NCO-Gruppen mit den genannten Blockierungsmitteln in Anwesenheit von beispielsweise Katalysatoren wie Dibutylzinndilaurat oder Zinn(II)bis(2-ethylhexanoat) durchgeführt. Die Blockierungsmittel und die entsprechenden Umsetzungsreaktionen sind dem Fachmann bekannt.

Als weitere Bestandteile kann auch mindestens ein übliches und an sich bekanntes Lackadditiv in der erfindungsgemäßen Klarlackbeschichtungszusammensetzung enthalten sein. Solche Lackadditive sind dem Fachmann bekannt und können je nach Einzelfall ausgewählt werden.

Insbesondere geeignete Lackadditive sind
- insbesondere UV-Absorber;
- insbesondere Lichtschutzmittel wie HALS-Verbindungen, Benztriazole oder Oxalanilide;
- nicht-deckende, transparente Füllstoffe, wie SiO₂-Nanopartikel, Bariumsulfat und Zinkoxid
- Radikalfänger;
- Slipadditive;
- Polymerisationsinhibitoren;
- Entschäumer;
- Reaktivverdünner, wie sie aus dem Stand der Technik allgemein bekannt sind,
- Netzmittel wie Siloxane, fluorhaltige Verbindungen, Carbonsäurehalbester,
- Haftvermittler wie Tricyclodecandimethanol;
- weitere Rheologiehilfsmittel, die von den oben beschriebenen Rheologiehilfsmitteln (D) verschiedene sind, wie insbesondere Polyamide (beispielsweise unter dem Handelsnamen Disparlon erhältlich) oder auch pyrogene Kieselsäuren (beispielsweise unter dem Handelsnamen Aerosil erhältlich), beziehungsweise deren Anreibungen in entsprechenden Harzen als Bindemittel,
- filmbildende Hilfsmittel wie Cellulose-Derivate;
- und/oder Flammschutzmittel.

Die erfindungsgemäße Klarlackbeschichtungszusammensetzung kann beispielsweise thermisch gehärtet werden. Zu diesem Zweck enthält sie beispielsweise den mindestens einen Polyester (A), das mindestens eine (Meth)Acrylat(co)polymerisat (DD) und das mindestens eine Melaminharz (B).
Im Rahmen der vorliegenden Erfindung bedeutet "thermisch härtbar" beziehungsweise der Begriff "thermische Härtung" die durch chemische Reaktion von reaktiven funktionellen Gruppen stattfindende Vernetzung einer Lackschicht (Bildung eines Beschichtungsfilms), wobei die energetische Aktivierung dieser chemischen Reaktion durch thermische Energie möglich ist. Wie der Fachmann weiß, ist bei dieser Härtung in unterschiedlichen Fällen der zusätzliche Einsatz von bestimmten Katalysatoren wünschenswert beziehungsweise notwendig, um die Härtungsreaktion zu beschleunigen beziehungsweise zu ermöglichen. Dabei können unterschiedliche funktionelle Gruppen, die zueinander komplementär sind, miteinander reagieren (komplementäre funktionelle Gruppen) und/oder die Filmbildung beruht auf der Reaktion von autoreaktiven Gruppen, das heißt also funktionellen Gruppen, die untereinander mit Gruppen ihrer Art reagieren. Beispiele geeigneter komplementärer reaktiver funktioneller Gruppen und autoreaktiver funktioneller Gruppen sind beispielsweise aus der deutschen Patentanmeldung DE 199 30 665 A1, Seite 7, Zeile 28, bis Seite 9, Zeilen 24, bekannt.

Bekanntermaßen tritt unter den gängigen Härtungsbedingungen, beispielsweise den unten beschriebenen Härtungsbedingungen, eine solche Vernetzung damit jedenfalls bei der erfindungsgemäßen Klarlackbeschichtungszusammensetzung auf, insbesondere durch die Vernetzung des hydroxyfunktionellen Polyesters (A) und der Melaminharze (B) und (C).

Möglich sind dabei die an sich bekannten Einkomponenten-(1K)- und Mehrkomponentensysteme, insbesondere Zweikomponenten-(2K)-systeme.

In Einkomponenten(1K)-Systemen liegen die zu vernetzenden Komponenten nebeneinander, das heißt in einer Komponente, vor. Voraussetzung hierfür ist beispielsweise, dass die zu vernetzenden Komponenten erst bei höheren Temperaturen und/oder durch den Einsatz von Katalysatoren vernetzen.

In Zweikomponenten(2K)-Systemen liegen die zu vernetzenden Komponenten in zwei Komponenten vor, die erst kurz vor der Applikation zusammengegeben werden. Diese Form wird dann gewählt, wenn die zu vernetzenden Komponenten bereits bei Raumtemperatur, das heißt zwischen 10 und 30°C, insbesondere 25°C, miteinander reagieren.

Wie der Fachmann weiß, vernetzen die in der erfindungsgemäßen Klarlackbeschichtungszusammensetzung vorhandenen Verbindungen, insbesondere der mindestens eine Polyester (A) und die Melaminharze (B) und (C), in der Regel nicht bereits bei Raumtemperatur. Die erfindungsgemäße Klarlackbeschichtungszusammensetzung ist demnach bevorzugt Einkomponenten(1K)-System. Sie kann aber natürlich auch als Zweikomponenten(2K)-System vorliegen. Dies ist beispielsweise dann der Fall, wenn die erfindungsgemäße Klarlackbeschichtungszusammensetzung wie oben beschriebene unblockierte Polyisocyanate enthält.

Neben der erfindungsgemäßen Klarlackbeschichtungszusammensetzung ist ein Verfahren zur Herstellung der erfindungsgemäßen Klarlackbeschichtungszusammensetzung ein weiterer Gegenstand der vorliegenden Erfindung. Natürlich gelten dabei alle wie oben beschriebenen vorteilhaften Ausführungsformen hinsichtlich der einzusetzenden beziehungsweise einsetzbaren Bestandteile der erfindungsgemäßen Klarlackbeschichtungszusammensetzung auch in Bezug auf das Verfahren zur Herstellung der erfindungsgemäßen Klarlackbeschichtungszusammensetzung.

Methodisch weist die Herstellung keine Besonderheiten auf, sondern erfolgt durch das Vermischen und Homogenisieren der vorstehend beschriebenen Bestandteile mit Hilfe üblicher und bekannter Mischverfahren und Vorrichtungen wie Rührkessel, Rührwerksmühlen, Extruder, Kneter, Ultraturrax, In-line-Dissolver, statische Mischer, Zahnkranzdispergatoren, Druckentspannungsdüsen und/oder Microfluidizer gegebenenfalls unter Ausschluss von aktinischer Strahlung. Dabei ist allerdings zu beachten, dass die organische Harnstoffverbindung (D) wie oben beschrieben vorzugsweise in Form einer Paste gemischt mit mindestens einem typischen organischen Lösemittel sowie mindestens einem Polyester, beispielsweise einem Polyester (A), und/oder einem (Meth)Acrylat(co)polymerisat, insbesondere einem wie (Meth)Acrylat(co)polymerisat (DD), eingesetzt wird. Das heißt, die Paste wird zunächst separat hergestellt und dann mit den weiteren Bestandteilen gemischt.

Weiterer Gegenstand der vorliegenden Erfindung ist die Verwendung der erfindungsgemäßen Klarlackbeschichtungszusammensetzung. Die erfindungsgemäße Klarlackbeschichtungszusammensetzung eignet sich insbesondere zum Einsatz in der Automobillackierung zur Herstellung von Klarlackierungen auf unterschiedlichen Substraten und wird dementsprechend verwendet. Demzufolge ist auch eine Klarlackschicht, die aus der erfindungsgemäßen Klarlackbeschichtungszusammensetzung auf einem Substrat hergestellt wurde, Gegenstand der vorliegenden Erfindung. Natürlich gelten alle wie oben beschriebenen vorteilhaften Ausführungsformen hinsichtlich der einzusetzenden beziehungsweise einsetzbaren Bestandteile der erfindungsgemäßen Klarlackbeschichtungszusammensetzung auch in Bezug auf die Verwendung der erfindungsgemäßen Klarlackbeschichtungszusammensetzung sowie die daraus hergestellte Klarlackschicht.

Die Applikation der erfindungsgemäßen Klarlackbeschichtungszusammensetzung auf ein Substrat kann durch alle üblichen Applikationsmethoden, wie beispielsweise Spritzen, Rakeln, Streichen, Giessen, Tauchen, Tränken, Träufeln oder Walzen erfolgen. Dabei kann das zu beschichtende Substrat als solches ruhen, wobei die Applikationseinrichtung oder -anlage bewegt wird. Indes kann auch das zu beschichtende Substrat, insbesondere ein Coil, bewegt werden, wobei die Applikationsanlage relativ zum Substrat ruht oder in geeigneter Weise bewegt wird.

Vorzugsweise werden Spritzapplikationsmethoden angewandt, wie zum Beispiel Druckluftspritzen (Pneumatische Applikationsanlagen), Airless-Spritzen, Hochrotation, elektrostatischer Sprühauftrag (ESTA), gegebenenfalls verbunden mit Heissspritzapplikation wie zum Beispiel Hot-Air-Heissspritzen.

Bevorzugt beträt die Schichtdicke im gehärteten, trockenen Zustand zwischen 10 und 150 Mikrometer, insbesondere zwischen 20 und 80 Mikrometer ganz besonders bevorzugt zwischen 25 und 70 Mikrometer.

Nach der Applikation und vor der Aushärtung der erfindungsgemäßen Klarlackbeschichtungszusammensetzung kann eine gewisse Ruhezeit beziehungsweise Abdunstzeit von beispielsweise 1 Minute bis 60 Minuten, insbesondere 2 Minuten bis 10 Minuten, erfolgen. Die Ruhezeit dient beispielsweise zum Verlauf und zur Entgasung der Lackschichten oder zum Verdunsten von flüchtigen Bestandteilen wie Lösemittel. Die Ruhezeit kann bei Raumtemperatur, das heißt zwischen 10 und 30°C, erfolgen oder auch durch die Anwendung erhöhter Temperaturen und/oder durch eine reduzierte Luftfeuchte unterstützt und/oder verkürzt werden, sofern hierbei keine Schädigungen oder Veränderungen der Lackschichten eintreten, etwa eine vorzeitige vollständige Vernetzung.

Nach der Applikation und gegebenenfalls der Abdunstzeit der erfindungsgemäßen Klackbeschichtungszusammensetzung auf einem Substrat, erfolgt die Härtung, wodurch eine Klarlackierung gebildet wird.

Die thermische Härtung der erfindungsgemäßen Klarlackbeschichtungszusammensetzung weist keine methodischen Besonderheiten auf, sondern erfolgt nach den üblichen und bekannten Methoden wie Erhitzen in einem Umluftofen oder Bestrahlen mit IR-Lampen. Hierbei kann die thermische Härtung auch stufenweise erfolgen. Eine weitere Härtungsmethode ist die Härtung mit nahem Infrarot (NIR-Strahlung). Die Härtung wird in der Regel bei einer Temperatur von 10 bis 200°C, besonders bevorzugt 50 bis 190°C und insbesondere 80 bis 180°C während einer Zeit von beispielsweise 1 Minuten bis zu 10 Stunden, besonders bevorzugt 2 Minuten bis zu 2 Stunde und insbesondere 5 Minuten bis 60 Minuten durchgeführt. Im Falle der bevorzugt eingesetzten Einkomponenten-Klarlackbeschichtungssysteme erfolgt die Härtung bevorzugt bei einer Temperatur von 80 bis 180°C während einer Zeit von 5 Minuten bis 60 Minuten.

Das Substrat wird entweder direkt beschichtet (einschichtige Lackierung) oder aber die Klarlackschicht wird auf schon vorhandenen, zuvor applizierten und gegebenenfalls getrockneten beziehungsweise gehärteten Lackschichten ausgebildet, wobei dann eine Mehrschichtlackierung resultiert. Bevorzugt sind Mehrschichtlackierungen auf metallischen Substraten oder Kunststoffsubstraten. Bevorzugte Mehrschichtlackierungen auf metallischen Substraten bestehen meist, in der angegebenen Reihenfolge vom Substrat aus betrachtet, aus einer Konversionsbeschichtung (beispielsweise Phosphatierung), einer Elektrotauchlackschicht, einer Füllerschicht, einer Basislackschicht und der erfindungsgemäßen Klarlackschicht. Die hierbei einsetzbaren Lacke, deren Zusammensetzungen, zu wählende Schichtdicken sowie Applikations- und Härtungsmethoden sind dem Fachmann bekannt und können von diesem einfach aufgrund seines Fachwissens ausgewählt werden. Im Falle von Kunststoffsubstraten werden die üblichen, in der Kunststofflackierung einsetzbaren Füller-, Einschichtdecklack-, Basislackbeschichtungszusammensetzungen, deren Auswahl und Einsatz dem Fachmann bekannt sind, eingesetzt und dann mit der erfindungsgemäßen Klarlackbeschichtungszusammensetzung überschichtet, wobei dann die erfindungsgemäße Klarlackschicht resultiert. Die einzelnen Schichten der Mehrschichtlackierungen können jeweils einzeln gehärtet werden oder aber die Herstellung der Mehrschichtlackierungen erfolgt nach dem an sich bekannten nassin-nass-Verfahren; das heißt, die einzelnen Schichten werden appliziert, nur kurz abgelüftet und/oder vorgetrocknet ohne das eine vollständige Vernetzung eintritt, und dann gemeinsam gehärtet. Natürlich sind auch Kombinationen möglich. So kann beispielsweise eine jeweils separate Härtung von Elektrotauchlack und Füller erfolgen, während die im Anschluss aufgebrachten Basislack- und Klarlackbeschichtungszusammensetzungen gemeinsam gehärtet werden.

Das Substrat ist bevorzugt ein metallisches Substrat oder ein Kunststoffsubstrat, wie sie zur Herstellung von Karosserie- und/oder Anbauteilen im Automobilbau verwendet werden. Ganz besonders bevorzugt sind metallische Substrate.

Die Erfindung wird anfolgend anhand von Ausführungsbeispielen näher beschrieben.

### Beispiele

### Herstellungsbeispiel 1, Synthese eines Polyesters (A)

In einem mit einem Rührer, Rückflußkühler und Wasserabscheider versehenen 3,5 I Reaktor werden 678,1 g Isononansäure und 364,8 g Pentaerythrit zusammengegeben. Der Wasserabscheider wird mit Xylol (Schleppmittel) versetzt und die Reaktionsmischung auf 160°C erhitzt. Nach 120 Minuten wird der Wasserabscheider entleert und die Reaktionsmischung auf 100°C abgekühlt. Nach dem Abkühlen wird eine Füllkörperkolonne eingebaut. Danach werden 287,4 g Trimethylolpropan, 826,4 g Hexahydrophthalsäureanhydrid und 343,4 g 2-Butyl-2-Ethyl-1,3-Propandiol zugegeben und die Reaktionsmischung langsam auf maximal 220°C erhitzt. Hierbei darf die Kolonnenkopftemperatur 85°C nicht überschreiten. Zur Überwachung des Reaktionsverlaufes wird das Volumen des Kondensats (Wasser im Wasserabscheider) mitprotokolliert und von Zeit zu Zeit eine Probe der Reaktionsmischung (Produktschmelze) zur Bestimmung der Säurezahl entnommen. Nachdem die zuvor berechnete, einer vollständigen Umsetzung entsprechende Menge an Kondensat erreicht ist, wird der Xylolanteil destillativ entfernt. Das Reaktionsgemisch wird bei 220°C gerührt, bis eine Säurezahl von 11,5 bis 13,5 mg KOH/g erreicht ist. Das Gemisch wird auf 145°C abgekühlt und mit Solventnaphtha auf einen Festkörper von 63 ± 2 % angelöst.

Der resultierende Polyester hat einen Festkörperanteil von 63 ± 2 % und eine Viskosität von 450 - 650 mPa·s (bestimmt gemäß DIN EN ISO 2884 -1; Brookfield 03/ 10000 1/s). Die resultierende Hydroxylzahl beträgt 164 mg KOH/g, das gewichtsmittlere Molekulargewicht M_{w} beträgt 3349 g/mol und das zahlenmittlere Molekulargewicht Mₙ beträgt 1193 g/mol.

### Herstellungsbeispiel 2, Synthese einer Paste enthaltend ein Rheologiehilfsmittel (D)

a)
   Ein 5 I Juvo-Reaktionsgefäß mit Heizmantel, Thermometer, Rührer und mit aufgesetztem Kühler wurde mit 875,7 g eines aromatischen Lösemittels beschickt. Unter Rühren und Schutzgasatmosphäre (200 cm³/min Stickstoff) wurde das aromatische Lösemittel unter Überdruck (max. 3,5 bar) auf 160°C erhitzt. Mit Hilfe einer Messpumpe wurde eine Mischung aus 37,5 g Di-tert.-butylperoxide und 138,6 g eines aromatischen Lösemittels gleichmäßig und tropfenweise innerhalb von 4,75 h hinzugegeben. 0,25 h nach Beginn der Zugabe wurden mit Hilfe einer Messpumpe 848,4 g Styrol, 600,0 g n-Butylacrylat, 418,2 g Hydroxyethylmethacrylat und 38,4 g Methacrylsäure innerhalb von 4 h gleichmäßig hinzugegeben. Nach Beendigung der Zugabe wurde die Temperatur noch für 2 h gehalten und dann das Produkt auf 60°C abgekühlt und durch einen 5 µm GAF-Bag gefiltert. Das resultierende Harz hatte eine T_{g} von 24°C, eine Säurezahl von 15 mg KOH/g (nach DIN 53402), einen Feststoffgehalt von 65% +/- 1 und eine Viskosität von 8,5 dPa · s gemäß der Versuchsvorschrift nach DIN ISO 2884-1 (55% in Solventnaphtha PK (10), 23°C). Die resultierende Hydroxylzahl beträgt 95 mg KOH/g, das gewichtsmittlere Molekulargewicht M_{w} beträgt 8600 g/mol und das zahlenmittlere Molekulargewicht Mₙ beträgt 3300 g/mol.
b)
   Ein 1 I-Reaktor wurde mit 423,5 g der Harzlösung gemäß Schritt a) befüllt und mit 29,4 g Butylacetat verdünnt. Danach wurden 11,2 g Benzylamin hinzugefügt und die Mischung für 30 min gerührt. Nach dieser Zeit wurde unter Aufwand hoher Scherkräfte eine Mischung von 8,8 g Hexamethylendiisocyanat und 17,1 g Butylacetat so hinzugefügt, dass eine Reaktionstemperatur von 40°C nicht überschritten wurde. Die so erhaltene Mischung hatte eine Viskosität von > 800mPas (10 s⁻¹) (Z3) (DIN ISO 2884-1) und einen Feststoffgehalt von 59,0%.

### Herstellung von Klarlackbeschichtungszusammensetzungen

Gemäß Tabelle 1 wurden eine erfindungsgemäße Zusammensetzung und eine Vergleichszusammensetzung durch Vermischen ihrer Bestandteile und Homogenisieren der resultierenden Mischungen hergestellt (Angaben in Tabelle 1 in Gewichtsteilen). Direkt vor der wie unten beschriebenen Applikation auf ein Substrat wurden die fertigen Rezepturen mit einer Mischung aus Solventnaphtha 160/180 (20 %), Solventnaphtha 180/210 (35 %), Xylol (25 %), Butylacetat (8,5 %), Butanol (11,5 %) auf dieselbe Spritzviskosität (26 Sekunden DIN 4 Auslaufzeit bei 20°C) eingestellt. Bei Spritzviskosität hatte die erfindungsgemäße Klarlackbeschichtungszusammensetzung einen Festkörpergehalt (nfA) von 46,9 %. Der nfA der Vergleichszusammensetzung betrug bei Spritzviskosität lediglich 43,1 %.

**Tabelle 1: Zusammensetzung der Klarlackbeschichtungszusammensetzungen**

| **Bestandteil** | **Vergleich** | **Erfindungsgemäß** |
|---|---|---|
| Polyester (A) gemäß Herstellbeispiel 1 | | 34,800 |
| Handelsübliche Acrylatharzlösung (nfA 60%, OH-Zahl 128) | 33,800 | |
| Melamin-Formaldehyd-Harz (C)¹ | 24,300 | 17,400 |
| Melamin-Formaldehyd-Harz (B)² | | 8,800 |
| Paste gemäß Herstellbeispiel 2 | 17,000 | 20,000 |
| Cylink 2000 (von Cytec) ³ | 4,000 | 4,000 |
| Xylol | 1,185 | |
| Solventnaphtha | 7,250 | 5,500 |
| Handelsübliche silikonhaltige Obertlächenadditive | 0,115 | 0,200 |
| Handelsübliche Lichtschutzmittel | 0,900 | 0,950 |
| Solvesso 150 | 4,700 | 6,100 |
| Butyldiglykolacetat | 1,000 | 1,100 |
| Butyldiglykol | 3,000 | |
| Butanol | 2,000 | |
| Sulfonsäurekatalysator (E) ⁴ | 0,150 | 0,150 |
| Sulfonsäurekatalysator (E) ⁵ | | 0,100 |
| Handelsübliches Verlaufsadditiv auf Acrylatbasis | 0,600 | |

| | | |
|---|---|---|
| Anmerkung: Das Referenzharz HMMM (Luwipal^{®} 066, BASF) hat eine gemessene Vernetzungsbeginntemperatur von 219°C. ¹ (Luwipal 018 BX von BASF, nfA 72% in Butanol, Vernetzungsbeginntemperatur 169°C) ² (Luwipal 014 von BASF nfA 52 % in Butanol, Vernetzungsbeginntemperatur 141 °C) ³ TACT-Vernetzer (nfA 50 % in Butanol) ⁴ CYCAT 4045 (35 % aktiver Katalysator in Ethylenglykol, von Cytec) ⁵ Nacure 5076 (70 % aktiver Katalysator in Isopropanol, von King Industries) | | |

### Herstellung und Eigenschaften von Mehrschichtbeschichtungen

Es wurden Mehrschichtbeschichtungen auf mit KTL (*CathoGuard* 320) beschichteten Stahlblechen (Gardobond 26S 60 0C) aufgebaut. Alle Lacke wurden mittels ESTA-Applikation aufgetragen. Zunächst wurde ein handelsüblicher wässriger grau/anthrazitfarbender Füller appliziert, für 5 Minuten bei 25°C abgelüftet und für 10 Minuten bei 80°C, dann für 20 Minuten bei 160°C, eingebrannt (Trockenschichtdicke 30 Mikrometer). Danach folgte die Applikation eines handelsüblichen schwarzen Wasserbasislacks, ein 5-minütiges Ablüften bei 25°C sowie ein 10-minütiges Trocknen bei 80°C (Trockenschichtdicke 12 Mikrometer). Zuletzt erfolgte die Applikation der Klarlackbeschichtungszusammensetzungen gemäß Tabelle 1. Die Klarlackbeschichtungszusammensetzungen wurden ebenfalls für 5 Minuten bei 25°C abgelüftet und anschließend für 20 Minuten bei 140°C eingebrannt (Trockenschichtdicke 40 Mikrometer).

Die so hergestellten Mehrschichtbeschichtungen wurden hinsichtlich des Verlaufs beziehungsweise des Erscheinungsbildes ("appearance") untersucht. Die Analysen erfolgten über Wavescanmessungen (Longwave/Shortwave). Als Messgerät wurde ein Wavescan II von Byk-Gardner eingesetzt. Bekanntermaßen korrelieren niedrige Werte von LW/SW (Longwave/Shortwave) mit einem guten Verlauf und einem daraus resultierenden guten und hochwertigem Erscheinungsbild (gute Abbildungsunterscheidbarkeit (DOI), hohe Oberflächenglätte). Die Ergebnisse sind in Tabelle 2 dargestellt.

**Tabelle 2: Messergebnisse**

| | **Vergleich** | **Erfindungsgemäß** |
|---|---|---|
| LW vertikal | 7 | 5 |
| SW vertikal | 24 | 19 |
| LW horizontal | 10 | 9 |
| SW horizontal | 22 | 17 |

Anmerkung: Die Bleche wurden einmal in horizontaler, einmal in vertikaler Lage beschichtet, um dadurch die Applikationsbedingungen für unterschiedliche Bereiche einer Automobilkarosserie nachzustellen.

Die Ergebnisse zeigen, dass der Verlauf und das damit resultierende Erscheinungsbild der mit der erfindungsgemäßen Klarlackbeschichtungszusammensetzung hergestellten Mehrschichtbeschichtungen wesentlich besser sind als bei dem Vergleichssystem. Hinzu kommt, dass die erfindungsgemäße Klarlackbeschichtungszusammensetzung einen signifikant höheren Festkörper beziehungsweise einen niedrigeren Gehalt an organischen Lösemitteln aufweist und damit ein deutlich verbessertes ökologisches Profil aufweist.

## Patentansprüche

1. Klarlackbeschichtungszusammensetzung, enthaltend
(A) mindestens einen Polyester
mit einer OH-Zahl von 100 - 220 mg KOH/g, enthaltend
(A1) 10 bis 20 mol-% mindestens eines acyclischen, aliphatischen, verzweigten Polyols mit zwei Hydroxygruppen,
(A2) 5 bis 15 mol-% mindestens eines acyclischen, aliphatischen, verzweigten Polyols mit drei Hydroxygruppen,
(A3) 10 bis 20 mol-% mindestens eines acyclischen, aliphatischen, verzweigten Polyols mit vier Hydroxygruppen,
(A4) 25 bis 40 mol-% mindestens einer cycloaliphatischen 1,2-Dicarbonsäure und/oder das Anhydrid dieser Dicarbonsäure sowie
(A5) 20 bis 35 mol-% Isononansäure,
wobei die angegebenen molaren Anteile jeweils auf den molaren Gesamtanteil der Verbindungen (A1) bis (A5) bezogen sind und dieser molare Gesamtanteil mindestens 70 mol-%, der in dem Polyester (A) enthaltenen Verbindungen ausmacht;
(B) mindestes ein butanolverethertes Melamin-Formaldehyd-Harz mit einer Vernetzungsbeginntemperatur, die zwischen 65°C -100°C, niedriger als die Vernetzungsbeginntemperatur von Hexamethoxymethylmelamin;
(C) mindestes ein butanolverethertes Melamin-Formaldehyd-Harz mit einer Vernetzungsbeginntemperatur, die zwischen 30°C - 60°C, niedriger als die Vernetzungsbeginntemperatur von Hexamethoxymethylmelamin;
(D) mindestens eine organische Harnstoffverbindung als Rheologiehilfsmittel;
(E) mindestens einen Säurekatalysator.

2. Klarlackbeschichtungszusammensetzung nach Anspruch 1, **dadurch gekennzeichnet, dass**
der mindestens eine Polyester (A) in einer Menge von 12 bis 45 Gew.-%,
das mindestens eine butanolveretherte Melamin-Formaldehyd-Harz (B) in einer Menge von 2 bis 10 Gew.-%,
das mindestens eine butanolveretherte Melamin-Formaldehyd-Harz (C) in einer Menge von 5 bis 20 Gew.-%,
die mindestens eine organische Harnstoffverbindung (D) als Rheologiehilfsmittel in einer Menge von 0,1 bis 7 Gew.-%, und
der mindestens eine Säurekatalysator in einer Menge von 0,01 bis 3 Gew.-%, jeweils bezogen auf die Gesamtmenge der Klarlackbeschichtungszusammensetzung, enthalten ist.

3. Klarlackbeschichtungszusammensetzung nach Anspruch 1, **dadurch gekennzeichnet, dass** zudem mindestens ein (Meth)Acrylat(co)polymerisat (DD) mit einer Glasübergangstemperatur von -40°C. bis 70°C und einer OH-Zahl von 60 bis 200 mg KOH/g enthalten ist.

4. Klarlackbeschichtungszusammensetzung nach Anspruch 2, **dadurch gekennzeichnet, dass** zudem mindestens ein (Meth)Acrylat(co)polymerisat (DD) mit einer Glasübergangstemperatur von -40°C bis 70°C und einer OH-Zahl von 60 bis 200 mg KOH/g in einer Menge von 5 bis 20 Gew.-%, bezogen auf die Gesamtmenge der Klarlackbeschichtungszusammensetzung, enthalten ist.

5. Klarlackbeschichtungszusammensetzung nach Anspruch 1 oder 3, **dadurch gekennzeichnet, dass** zudem mindestens ein organisches Lösemittel enthalten ist.

6. Klarlackbeschichtungszusammensetzung nach Anspruch 2 oder 4, **dadurch gekennzeichnet, dass** zudem mindestens ein organisches Lösemittel in einer Menge von 10 bis 60 Gew.-%, bezogen auf die Gesamtmenge der Klarlackbeschichtungszusammensetzung, enthalten ist.

7. Klarlackbeschichtungszusammensetzung nach einem der Ansprüche 1 bis 6, **dadurch gekennzeichnet, dass** zudem mindestens ein Tris(alkoxycarbonylamino)-1,3,5-triazin, bevorzugt in einer Menge von 0,5 bis 10 Gew.-%, bezogen auf die Gesamtmenge der Klarlackbeschichtungszusammensetzung, enthalten ist.

8. Klarlackbeschichtungszusammensetzung nach einem der Ansprüche 1 bis 7, **dadurch gekennzeichnet, dass** die mindestens eine organische Harnstoffverbindung als Rheologiehilfsmittel ein Additionsprodukt eines Polyisocyanats und eines araliphatischen oder aliphatischen primären Monoamins ist.

9. Klarlackbeschichtungszusammensetzung nach einem der Ansprüche 1 bis 8, **dadurch gekennzeichnet, dass** der Säurekatalysator ein Sulfonsäurekatalysator ausgewählt aus der Gruppe der freien Sulfonsäuren und der aminblockierten Sulfonsäuren ist.

10. Verfahren zur Herstellung einer Klarlackbeschichtungszusammensetzung gemäß einem der Ansprüche 1 bis 9 durch Vermischen der enthaltenen Bestandteile.

11. Verfahren nach Anspruch 10, **dadurch gekennzeichnet, dass** die Harnstoffverbindung in Form einer Paste zugegeben wird, die eine Mischung der Harnstoffverbindung mit einem Polyester und/oder einem (Meth)Acrylat(co)-polymerisat und mindestens einem organischen Lösemittel enthält.

12. Verfahren nach Anspruch 11, **dadurch gekennzeichnet, dass** die Paste ein (Meth)Acrylat(co)polymerisat (DD) enthält.

13. Verfahren zur Herstellung einer gehärteten Klarlackierung auf einem Substrat durch Applikation einer Klarlackbeschichtungszusammensetzung nach einem der Ansprüche 1 - 9 auf ein Substrat und anschließende thermische Härtung bei einer Temperatur von 80 bis 180°C.

14. Verfahren nach Anspruch 13, **dadurch gekennzeichnet, dass** die Klarlackbeschichtungszusammensetzung auf schon vorhandenen, zuvor applizierten und gegebenenfalls gehärteten Lackschichten hergestellt wird und damit das Substrat ein vorbeschichtetes Substrat ist, wobei dann eine Mehrschichtlackierung resultiert.

15. Mehrschichtbeschichtung, die gemäß Anspruch 14 hergestellt wurde.

## Claims

1. Clearcoat coating composition comprising
(A) at least one polyester
having an OH number of 100 - 220 mg KOH/g, comprising
(A1) 10 to 20 mol% of at least one acyclic, aliphatic, branched polyol having two hydroxyl groups,
(A2) 5 to 15 mol% of at least one acyclic, aliphatic, branched polyol having three hydroxyl groups,
(A3) 10 to 20 mol% of at least one acyclic, aliphatic, branched polyol having four hydroxyl groups,
(A4) 25 to 40 mol% of at least one cycloaliphatic 1,2-dicarboxylic acid and/or the anhydride of this dicarboxylic acid, and
(A5) 20 to 35 mol% of isononanoic acid,
the stated molar fractions being based in each case on the total molar fraction of the compounds (A1) to (A5) and this total molar fraction accounts for at least 70 mol% of the compounds present in the polyester (A);
(B) at least one butanol-etherified melamine-formaldehyde resin
having a crosslinking onset temperature between 65°C - 100°C lower than the crosslinking onset temperature of hexamethoxymethylmelamine;
(C) at least one butanol-etherified melamine-formaldehyde resin
having a crosslinking onset temperature between 30°C - 60°C lower than the crosslinking onset temperature of hexamethoxymethylmelamine;
(D) at least one organic urea compound as rheological assistant;
(E) at least one acid catalyst.

2. Clearcoat coating composition of Claim 1, **characterized in that** it comprises
the at least one polyester (A) in an amount of 12% to 45% by weight,
the at least one butanol-etherified melamine-formaldehyde resin (B) in an amount of 2% to 10% by weight,
the at least one butanol-etherified melamine-formaldehyde resin (C) in an amount of 5% to 20% by weight,
the at least one organic urea compound (D) as rheological assistant in an amount of 0.1% to 7% by weight, and
the at least one acid catalyst in an amount of 0.01 to 3% by weight,
based in each case on the total amount of the clearcoat coating composition.

3. Clearcoat coating composition of Claim 1, **characterized in that** it further comprises at least one (meth)acrylate (co)polymer (DD) having a glass transition temperature of -40°C to 70°C and an OH number of 60 to 200 mg KOH/g.

4. Clearcoat coating composition of Claim 2, **characterized in that** it further comprises at least one (meth)acrylate (co)polymer (DD) having a glass transition temperature of -40°C to 70°C and an OH number of 60 to 200 mg KOH/g in an amount of 5% to 20% by weight, based on the total amount of the clearcoat coating composition.

5. Clearcoat coating composition of Claim 1 or 3, **characterized in that** it further comprises at least one organic solvent.

6. Clearcoat coating composition of Claim 2 or 4, **characterized in that** it further comprises at least one organic solvent in an amount of 10% to 60% by weight, based on the total amount of the clearcoat coating composition.

7. Clearcoat coating composition of any of Claims 1 to 6, **characterized in that** it further comprises at least one tris(alkoxycarbonylamino)-1,3,5-triazine, preferably in an amount of 0.5% to 10% by weight, based on the total amount of the clearcoat coating composition.

8. Clearcoat coating composition of any of Claims 1 to 7, **characterized in that** the at least one organic urea compound as rheological assistant is an adduct of a polyisocyanate and an araliphatic or aliphatic primary monoamine.

9. Clearcoat coating composition of any of Claims 1 to 8, **characterized in that** the acid catalyst is a sulfonic acid catalyst selected from the group consisting of free sulfonic acids and amine-blocked sulfonic acids.

10. Process for preparing a clearcoat coating composition according to any of Claims 1 to 9 by mixing the constituents present.

11. Process of Claim 10, **characterized in that** the urea compound is added in the form of a paste which comprises a mixture of the urea compound with a polyester and/or with a (meth)acrylate (co)polymer and at least one organic solvent.

12. Process of Claim 11, **characterized in that** the paste comprises a (meth)acrylate (co)polymer (DD).

13. Method for producing a cured clearcoat on a substrate by applying a clearcoat coating composition of any of Claims 1-9 to a substrate and subsequently curing thermally at a temperature of 80 to 180°C.

14. Method of Claim 13, **characterized in that** the clearcoat coating composition is produced on existing paint coats, applied and optionally cured beforehand, and hence the substrate is a precoated substrate, the result then being a multicoat paint system.

15. Multicoat coating produced according to Claim 14.

## Revendications

1. Composition de revêtement de laque transparente, contenant
(A) au moins un polyester
ayant un indice OH de 100 à 220 mg KOH/g, contenant
(A1) 10 à 20 % en moles d'au moins un polyol acyclique, aliphatique, ramifié, contenant deux groupes hydroxy,
(A2) 5 à 15 % en moles d'au moins un polyol acyclique, aliphatique, ramifié, contenant trois groupes hydroxy,
(A3) 10 à 20 % en moles d'au moins un polyol acyclique, aliphatique, ramifié, contenant quatre groupes hydroxy,
(A4) 25 à 40 % en moles d'au moins un acide 1,2-dicarboxylique cycloaliphatique et/ou l'anhydride de cet acide carboxylique, et
(A5) 20 à 35 % en moles d'acide isononanoïque, les proportions molaires indiquées se rapportant à chaque fois à la proportion molaire totale des composés (A1) à (A5), et cette proportion molaire totale étant d'au moins 70 % en moles des composés contenus dans le polyester (A) ;
(B) au moins une résine de mélamine-formaldéhyde éthérifiée par du butanol
ayant une température de début de réticulation qui est inférieure de 65 °C à 100 °C à la température de début de réticulation de l'hexaméthoxyméthylmélamine ;
(C) au moins une résine de mélamine-formaldéhyde éthérifiée par du butanol
ayant une température de début de réticulation qui est inférieure de 30 °C à 60 °C à la température de début de réticulation de l'hexaméthoxyméthylmélamine ;
(D) au moins un composé d'urée organique en tant qu'adjuvant de rhéologie ;
(E) au moins un catalyseur acide.

2. Composition de revêtement de laque transparente selon la revendication 1, **caractérisée en ce qu'**elle contient
au moins un polyester (A) en une quantité de 12 à 45 % en poids,
ladite au moins une résine de mélamine-formaldéhyde éthérifiée par du butanol (B) en une quantité de 2 à 10 % en poids,
ladite au moins une résine de mélamine-formaldéhyde éthérifiée par du butanol (C) en une quantité de 5 à 20 % en poids,
ledit au moins un composé d'urée organique (D) en tant qu'adjuvant de rhéologie en une quantité de 0,1 à 7 % en poids, et
ledit au moins un catalyseur acide en une quantité de 0,01 à 3 % en poids,
à chaque fois par rapport à la quantité totale de la composition de revêtement de laque transparente.

3. Composition de revêtement de laque transparente selon la revendication 1, **caractérisée en ce qu'**en outre au moins un (co)polymère de (méth)acrylate (DD) ayant une température de transition vitreuse de -40 °C à 70 °C et un indice OH de 60 à 200 mg KOH/g est contenu.

4. Composition de revêtement de laque transparente selon la revendication 2, **caractérisée en ce qu'**en outre au moins un (co)polymère de (méth)acrylate (DD) ayant une température de transition vitreuse de -40 °C à 70 °C et un indice OH de 60 à 200 mg KOH/g est contenu en une quantité de 5 à 20 % en poids, par rapport à la quantité totale de la composition de revêtement de laque transparente.

5. Composition de revêtement de laque transparente selon la revendication 1 ou 3, **caractérisée en ce qu'**en outre au moins un solvant organique est contenu.

6. Composition de revêtement de laque transparente selon la revendication 2 ou 4, **caractérisée en ce qu'**en outre au moins un solvant organique est contenu en une quantité de 10 à 60 % en poids, par rapport à la quantité totale de la composition de revêtement de laque transparente.

7. Composition de revêtement de laque transparente selon l'une quelconque des revendications 1 à 6, **caractérisée en ce qu'**en outre au moins une tris(alcoxycarbonylamino)-1,3,5-triazine est contenue, de préférence en une quantité de 0,5 à 10 % en poids, par rapport à la quantité totale de la composition de revêtement de laque transparente.

8. Composition de revêtement de laque transparente selon l'une quelconque des revendications 1 à 7, **caractérisée en ce que** ledit au moins un composé d'urée organique en tant qu'adjuvant de rhéologie est un produit d'addition d'un polyisocyanate et d'une monoamine primaire araliphatique ou aliphatique.

9. Composition de revêtement de laque transparente selon l'une quelconque des revendications 1 à 8, **caractérisée en ce que** le catalyseur acide est un catalyseur acide sulfonique choisi dans le groupe constitué par les acides sulfoniques libres et les acides sulfoniques bloqués par des amines.

10. Procédé de fabrication d'une composition de revêtement de laque transparente selon l'une quelconque des revendications 1 à 9 par mélange des constituants contenus.

11. Procédé selon la revendication 10, **caractérisé en ce que** le composé d'urée est ajouté sous la forme d'une pâte, qui contient un mélange du composé d'urée avec un polyester et/ou un (co)polymère de (méth)acrylate et au moins un solvant organique.

12. Procédé selon la revendication 11, **caractérisé en ce que** la pâte contient un (co)polymère de (méth)acrylate (DD).

13. Procédé de fabrication d'un laquage transparent durci sur un substrat par application d'une composition de revêtement de laque transparente selon l'une quelconque des revendications 1 à 9 sur un substrat, puis durcissement thermique à une température de 80 à 180 °C.

14. Procédé selon la revendication 13, **caractérisé en ce que** la composition de revêtement de laque transparente est placée sur des couches de laque déjà présentes, appliquées auparavant et éventuellement durcies, et le substrat est par conséquent un substrat pré-revêtu, un laquage multicouche en résultant alors.

15. Revêtement multicouche, qui a été fabriqué selon la revendication 14.
